# EUROPEAN PATENT APPLICATION

(11) **EP 4 835 037 A1**
(43) Date of publication of application: **04.11.2026**
(21) Application number: 24910839.0
(22) Date of filing: 17.12.2024
(51) Int. Cl.: C09K 19/44, C09K 19/30, G02F 1/13

(54) **LIQUID CRYSTAL COMPOSITION HAVING NEGATIVE DIELECTRIC ANISOTROPY AND LIQUID CRYSTAL DISPLAY DEVICE CONTAINING SAME**

(30) Priority: 29.12.2023 CN 202311871699
(71) Applicant: Jiangsu Hecheng Display Technology Co., Ltd., Nanjing, Jiangsu 210000 (CN)
(72) Inventor: YAN, Kang, Nanjing, Jiangsu 210000 (CN); HE, Di, Nanjing, Jiangsu 210000 (CN); YAO, Lifang, Nanjing, Jiangsu 210000 (CN); DING, Wenquan, Nanjing, Jiangsu 210000 (CN)
(74) Representative: Serjeants LLP
(86) International application number: PCT/CN2024/139982
(87) International publication number: WO 2025/139908

(57) **Abstract**

The present application provides a liquid crystal composition having negative dielectric anisotropy and a liquid crystal display device containing same. The liquid crystal composition comprises at least one stabilizer, at least one compound of formula II, and at least one compound of formula F and/or formula N. By means of the design of the stabilizer and liquid crystal components as well as the compounding synergy thereof, while having an excellent clearing point, excellent optical anisotropy, and excellent dielectric anisotropy Δε, the liquid crystal composition also has high elastic constants K₁₁, K₃₃, a small rotational viscosity γ₁, a smaller ratio of rotational viscosity to elastic constant γ₁/K₁₁, a smaller ratio of elastic constant to dielectric anisotropy K₁₁/Δε, a short response time, a fast response speed, low operating voltage and power consumption, and low LC scattering. At the same time, said composition exhibits excellent photoelectrical stability and a high voltage holding ratio (VHR), which can eliminate image sticking or accelerate the dissipation of image sticking.

## Description

### TECHNICAL FIELD

The present application belongs to the technical field of liquid crystal materials, specifically relates to a liquid crystal composition having negative dielectric anisotropy, and a liquid crystal display device comprising the liquid crystal composition.

### BACKGROUND ART

Liquid Crystal Display (LCD) is a device that realizes display relying on the electro-optical properties of liquid crystals. According to the arrangement configuration of liquid crystal molecules, it can be classified into PC (phase change), TN (twist nematic), STN (super twisted nematic), DS (dynamic scattering), FLC (ferroelectric liquid crystal), GH (guest-host), ECB (electrically controlled birefringence), OCB (optically compensated bend), IPS (in-plane switching), VA (vertical alignment), FFS (fringe field switching), FPA (field-induced photoreactive alignment) and the like. The main performance indicators of display devices include color reproduction, brightness, contrast, viewing angle, resolution, power consumption and the like. TFT-IPS/FFS combined with a TFT control matrix has become the mainstream application type due to its advantages such as high resolution, high contrast, high color reproduction and wide viewing angle.

In IPS/FFS display mode, to achieve a high-contrast display effect, it is necessary to reduce light leakage in the dark state. Apart from the device manufacturing process, the main light leakage factor of the device is optical scattering caused by the liquid crystal layer. The liquid crystal scattering degree (LC Scattering) can be measured according to the following formula: $LC Scattering = \frac{d \cdot {Δn}^{2} \cdot {\left({n}_{e}+{n}_{o}\right)}^{2}}{{K}_{ave}}$ wherein d represents the cell gap of the liquid crystal cell, nₑ represents the refractive index of extraordinary light, nₒ represents the refractive index of ordinary light, and Kₐᵥₑ is the average elastic constant. When the refractive index and cell gap of the liquid crystal have been designed, increasing Kₐᵥₑ can effectively improve the contrast of the display device. Increasing the nematic-isotropy phases transition temperature Cp of liquid crystal can usually obtain a larger Kₐᵥₑ, but meanwhile, the rotational viscosity of liquid crystal will also increase, resulting in a slow response speed of liquid crystal. An effective solution is to adopt monomers with a larger K value (such as cyclohexene-based monomers). After the increase of Kₐᵥₑ, it is required to increase the dielectric constant ε of the liquid crystal to maintain a low operating voltage and reduce power consumption. However, the extensive use of liquid crystal monomers with small dielectric constants will significantly increase the rotational viscosity γ₁ of liquid crystal. The effective solution is to use a small amount of liquid crystal monomers with large dielectric constants.

Nevertheless, cyclohexene-based monomers with large Kₐᵥₑ value and liquid crystal monomers with large dielectric constants generally possess low photoelectric stability due to their structural characteristics. Under long-term extreme operating environments, they tend to accumulate ions or decompose directly, causing problems such as the reduction of voltage holding ratio (VHR) and image sticking. Therefore, how to endow liquid crystal materials with high elastic constant and low viscosity, maintain high contrast, low operating voltage, low power consumption, short response time and low LC scattering, and meanwhile improve photoelectric stability, achieve high VHR and reduce image sticking, is an urgent problem to be solved in the art.

### INVENTION SUMMARY

The following is a summary of the subject matter described in detail herein. This summary is not intended to limit the scope of protection of the claims.

The present application provides a liquid crystal composition with negative dielectric anisotropy, and a liquid crystal display device comprising the liquid crystal composition. The liquid crystal composition has appropriate clearing point, optical anisotropy and dielectric anisotropy, and meanwhile possesses high elastic constants K₁₁ and K₃₃ as well as low rotational viscosity γ₁, reduced γ₁/K₁₁ ratio, shortened response time, reduced power consumption and decreased LC Scattering. In addition, the composition exhibits excellent photoelectric stability and a high voltage holding ratio (VHR) and is capable of eliminating image sticking or accelerating the dissipation of image sticking.

In the first aspect, the present application provides a liquid crystal composition having negative dielectric anisotropy, the liquid crystal composition comprises:
at least one stabilizer, the stabilizer is selected from a group consisting of the following compounds: 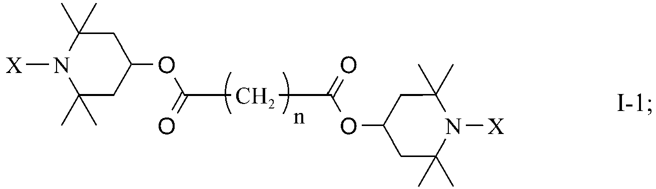 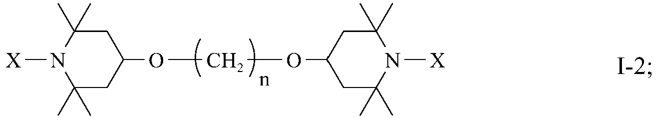 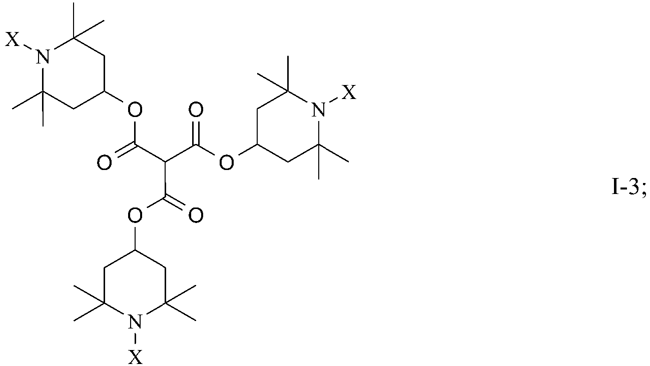 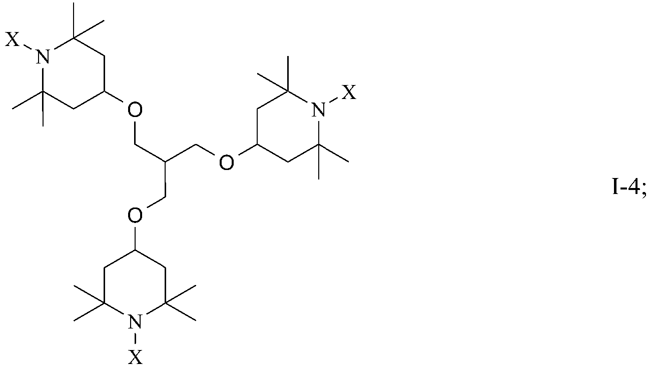
at least one compound of formula II: 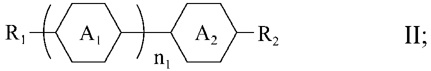 and
at least one compound of formula F and/or formula N: 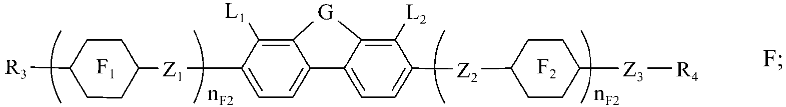 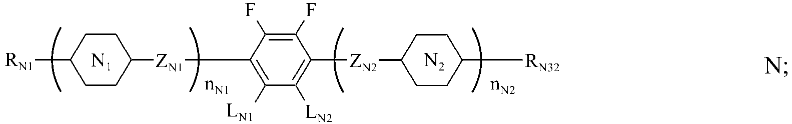
wherein, X represents -H, -OH, -O*, or C₁₋₅ (for example, C₁, C₂, C₃, C₄ or C₅) linear or branched alkyl; one or at least two nonadjacent -CH₂- in the C₁₋₅ linear or branched alkyl can each be independently replaced by -O- or -CO-; -O* represents oxygen radical;
R₁ and R₂ each independently represents C₁₋₁₂ (for example, C₁, C₂, C₃, C₄, C₅, C₆, C₇, C₈, C₉, C₁₀, C₁₁ or C₁₂) linear or branched alkyl, 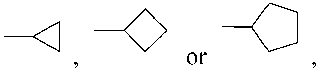 one or at least two nonadjacent -CH₂- in the C₁₋₁₂ linear or branched alkyl can each be independently replaced by - CH=CH-, -C=C-, -O-, -CO-, -CO-O- or -O-CO-;
R₃ and R₄ each independently represents -H, halogen, C₁₋₁₂ (for example, C₁, C₂, C₃, C₄, C₅, C₆, C₇, C₈, C₉, C₁₀, C₁₁ or C₁₂) linear or branched alkyl, 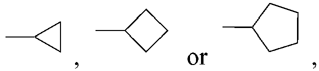 one or at least two nonadjacent -CH₂- in the C₁₋₁₂ linear or branched alkyl, 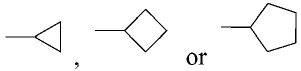 can each be independently replaced by -CH=CH-, -C=C-, -O-, -S-, -CO-, -CO-O- or -O-CO-, one or at least two -H in the above groups can each be independently substituted by -F or -Cl;
R_{N1} and R_{N2} each independently represents C₁₋₁₂ (for example, C₁, C₂, C₃, C₄, C₅, C₆, C₇, C₈, C₉, C₁₀, C₁₁ or C₁₂) linear or branched alkyl, 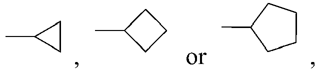 one or at least two nonadjacent -CH₂- in the C₁₋₁₂ linear or branched alkyl can each be independently replaced by - CH=CH-, -C=C-, -O-, -CO-, -CO-O- or -O-CO-;
ring 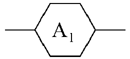 and ring 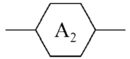 each independently represents 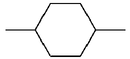 or 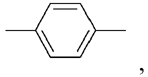 one or at least two -CH₂- in the 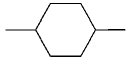 can be replaced by -O-, one or at most two single bonds in the rings can be replaced by double bond; at most one -H in the 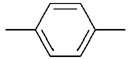 can be substituted by halogen, at least one ring 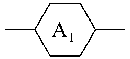 or ring 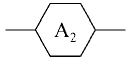 each independently represents 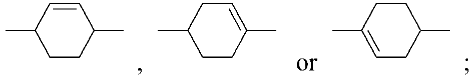
ring 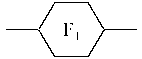 and ring 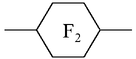 each independently represents 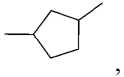 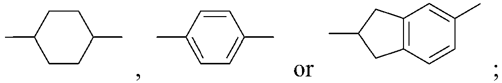 one or at least two -CH₂- in the 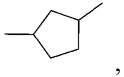 the 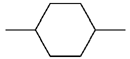 or the 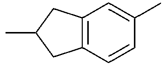 can be replaced by -O-, one or at most two single bonds in the rings can be replaced by double bond; one or at least two -H in the 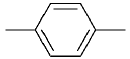 or the 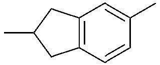 can be substituted by -F, -Cl, -CN, -CH₃ or -OCH₃, one or at least two - CH= in the rings can be replaced by -N=;
ring 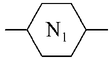 and ring 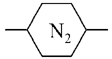 each independently represents 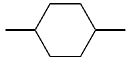 or 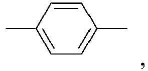 wherein one or at least two -CH₂- in 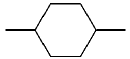 can be replaced by -O-, one or at most two single bonds in the rings can be replaced by double bond, wherein one or at least two -H in 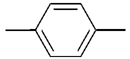 can each be independently substituted by -F, -Cl or -CN, one or at least two - CH= in the rings can be replaced by -N=;
G represents -O-, -S-, -CO-, -CF₂-, -NH- or -NF-;
L₁ and L₂ each independently represents -H, halogen, C₁₋₃ (for example, C₁, C₂ or C₃) halogenated or unhalogenated alkyl or C₁₋₃ (for example, C₁, C₂ or C₃) halogenated or unhalogenated alkoxy;
L_{N1} and L_{N2} each independently represents -H, halogen, C₁₋₃ (for example, C₁, C₂ or C₃) linear or branched alkyl or C₁₋₃ (for example, C₁, C₂ or C₃) linear or branched alkoxy;
Z₁, Z₂, Z_{N1} and Z_{N2} each independently represents single bond, -O-, -S-, -CO-O-, -O-CO-, -CH₂O-, -OCH₂-, -CH=CH-, -C=C-, -CH₂CH₂-, -CF₂CF₂-, -(CH₂)₄-, -CF₂O- or -OCF₂-;
Z₃ represents single bond, -O(CH₂)ₐ- or -S(CH₂)ₐ-;
a represents an integer of 0-5, for example, a may be 0, 1, 2, 3, 4 or 5;
n represents an integer of 1-20, for example, n may be 1, 2, 3, 4, 5, 6, 7, 8, 9, 10, 11, 12, 13, 14, 15, 16, 17, 18, 19 or 20;
n₁ represents 1 or 2; when n₁ = 2, ring 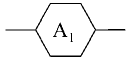 can be the same or different;
n_{F1} and n_{F2} each independently represents 0, 1 or 2; when n_{F1} = 2, ring 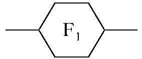 may be the same or different, Z₁ can be the same or different; when n_{F2} = 2, ring 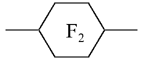 may be the same or different, Z₂ may be the same or different;
n_{N1} represents 0, 1, 2 or 3, n_{N2} represents 0 or 1, and 0 ≤ n_{N1} + n_{N2} ≤3;
when n_{N1} represents 2 or 3, ring 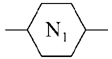 can be the same or different, Z_{N1} can be the same or different.

The study of the present application finds that during the application of oversaturated voltage, ions in the liquid crystal and device continuously accumulate near the electrodes under the action of DC bias voltage. After the voltage is removed, the ions are difficult to dissipate, and the formed internal electric field causes the liquid crystal to remain deflected, resulting in a gradual decrease in brightness and further forming image sticking. The liquid crystal composition with negative dielectric anisotropy provided by the present application comprises at least one stabilizer selected from a group consisting of the compound of formula I-1, the compound of formula I-2, the compound of formula I-3 and the compound of formula I-4. Such stabilizers are hindered amine light stabilizers, which can adsorb ions and free radicals, eliminate internal electric field, and accelerate the dissipation of image sticking. In the present application, the stabilizer with a specific structure is compounded with the compound of formula II containing a cyclohexene structure, the compound of formula F and/or formula N. Through the design and synergistic effect of each component, the liquid crystal composition possesses excellent optical anisotropy, clearing point and dielectric anisotropy Δε, and meanwhile exhibits high elastic constants K₁₁ and K₃₃, low rotational viscosity γ₁, a smaller ratio of rotational viscosity to elastic constant γ₁/K₁₁, and a smaller ratio of elastic constant to dielectric anisotropy K₁₁/Δε, accordingly, the composition achieves shorter response time and faster response speed, lower operating voltage and power consumption, as well as lower LC Scattering. Moreover, it shows excellent photoelectric stability, maintains a high voltage holding ratio (VHR), and can eliminate image sticking or accelerate dissipation of image sticking.

The following are preferred technical solutions of the present application, which are not intended to limit the technical solutions provided in the present application. The objectives and beneficial effects of the present application can be better achieved and realized by adopting the following preferred technical solutions.

In the present application, C₁₋₅ may be C₂, C₃, C₄ or C₅; C₁₋₁₂ may be C₁, C₂, C₃, C₄, C₅, C₆, C₇, C₈, C₉, C₁₀, C₁₁ or C₁₂; C₁₋₃ may be C₁, C₂ or C₃. In the present application, when n₂ = 2, the compound contains two rings 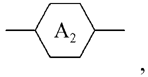 which may have the same structure or different structures. For example, one ring may be 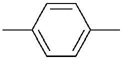 and the other ring may be 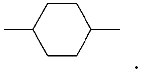 Any reference to the expression "the same or different" in the present application shall have the same meaning. In the present application, the expression "may each be independently replaced by ..." means that the group may or may not be replaced; both fall within the protection scope of the present application. The expression "may each be independently substituted by ..." shall be interpreted in the same manner. The "replaced" or "substituted" position can be any optional position. In the present application, the short straight lines on one or both sides of a group structure represent linkage bond rather than methyl groups, such as the short straight line on the left side of 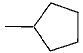 and the short straight lines on both sides of 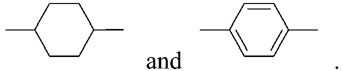 The halogen includes F, Cl, Br or I; the same description hereinafter shall have the same meaning. The term "halogenated" means that at least one -H in a group is substituted by a halogen (-F, -Cl, -Br or -I), and the same description hereinafter shall have the same meaning.

In some embodiments of the present application, the X represents -H, -OH, -O*, C₁₋₅ linear or branched alkyl, C₁₋₅ linear or branched alkoxy or C₁₋₅ linear or branched acyl.

In some embodiments of the present application, the X represents-H, -OH, -O*, -CH₃, - OCH₃ or -CO-CH₃.

In some embodiments of the present application, the n represents an integer of 2-16, and further preferably an integer of 2-14.

In some embodiments of the present application, the stabilizer comprises at least one compound selected from a group consisting of the compound of formula I-3 or the compound of formula I-4.

In some embodiments of the present application, the stabilizer comprises at least one compound selected from a group consisting of the compound of formula I-1 or the compound of formula I-3.

In some embodiments of the present application, the stabilizer comprises at least one compound, in which X represents -O*, selected from a group consisting of the compound of formula I-1, the compound of formula I-2, the compound of formula I-3 or the compound of formula I-4.

In some embodiments of the present application, the mass percentage content of the stabilizer in the liquid crystal composition is 0.001%-0.1%, for example, the mass percentage content may be 0.002%, 0.003%, 0.005%, 0.008%, 0.01%, 0.02%, 0.03%, 0.04%, 0.05%, 0.06%, 0.07%, 0.08% or 0.09%, etc., preferably 0.002%-0.05%, further preferably 0.002%-0.01%.

In some embodiments of the present application, the compound of formula II is selected from a group consisting of the following compounds: 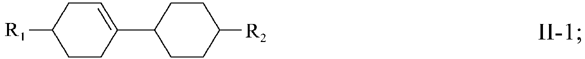 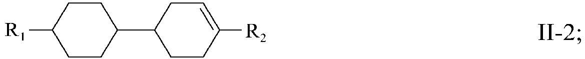 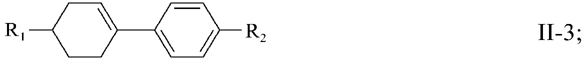 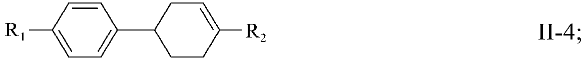 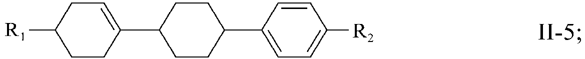 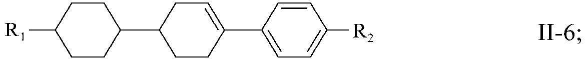 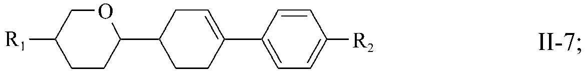 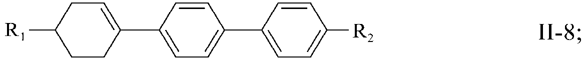 and 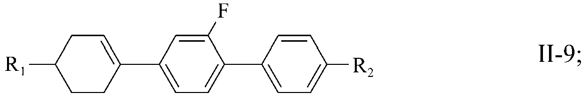 wherein, R₁ and R₂ have the same scopes of definition as those in formula II.

In some embodiments of the present application, the R₁ and R₂ represent C₁₋₁₀ (for example, C₁, C₂, C₃, C₄, C₅, C₆, C₇, C₈, C₉ or C₁₀) linear alkyl, C₁₋₉ (for example, C₁, C₂, C₃, C₄, C₅, C₆, C₇, C₈ or C₉) linear alkoxy or C₂₋₉ (for example, C₂, C₃, C₄, C₅, C₆, C₇, C₈ or C₉) linear alkenyl, further preferably C₁₋₁₀ linear alkyl or C₂₋₉ linear alkenyl.

In some embodiments of the present application, the compound of formula II comprises at least one (for example, one, two, three or four, etc.) compound selected from a group consisting of the compound of formula II-1, the compound of formula II-2, the compound of formula II-5 and the compound of formula II-6.

In some embodiments of the present application, the compound of formula II comprises at least one (for example, one, two, three or four, etc.) compound selected from a group consisting of the compound of formula II-2 and the compound of formula II-6.

In some embodiments of the present application, the compound of formula II is selected from a group consisting of the following compounds: 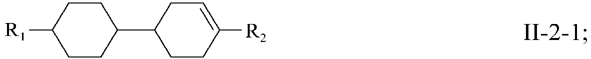 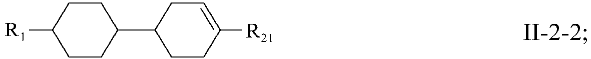 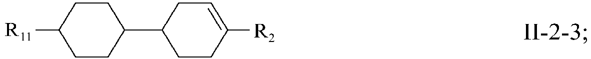 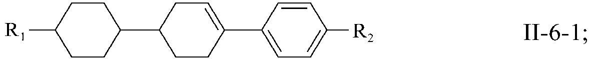 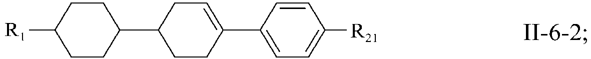 and 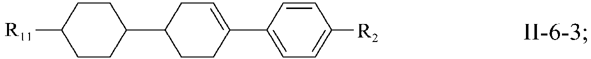 wherein, R₁ and R₂ each independently represents C₁₋₁₀ (for example, C₁, C₂, C₃, C₄, C₅, C₆, C₇, C₈, C₉ or C₁₀) linear alkyl or C₁₋₉ (for example, C₁, C₂, C₃, C₄, C₅, C₆, C₇, C₈ or C₉) linear alkoxy; R₁₁ and R₂₁ each independently represents C₂₋₁₀ (for example, C₁, C₂, C₃, C₄, C₅, C₆, C₇, C₈, C₉ or C₁₀) linear alkenyl.

In some embodiments of the present application, the compound of formula II comprises at least one (for example, one, two, three or four, etc.) compound selected from a group consisting of the compound of formula II-2-1, the compound of formula II-2-2, the compound of formula II-2-3, the compound of formula II-6-1 and the compound of formula II-6-3.

In some embodiments of the present application, the mass percentage content of the compound of formula II in the liquid crystal composition is 1%-30%, for example, the mass percentage content may be 2%, 3%, 4%, 5%, 6%, 8%, 10%, 12%, 15%, 18%, 20%, 22%, 25% or 28%, etc., further preferably 2%-20%.

In some embodiments of the present application, the mass percentage content of the at least one (for example, one, two, three or four, etc.) compound of formula II selected from a group consisting of the compound of formula II-2 and the compound of formula II-6 is 1%-30%, for example, the mass percentage content may be 2%, 3%, 4%, 5%, 6%, 8%, 10%, 12%, 15%, 18%, 20%, 22%, 25% or 28%, etc., further preferably 2%-20%.

In some embodiments of the present application, the mass percentage content of the at least one (for example, one, two, three or four, etc.) compound of formula II selected from a group consisting of the compound of formula II-2-1, the compound of formula II-2-2, the compound of formula II-2-3, the compound of formula II-6-1 and the compound of formula II-6-3 is 1%-28%, for example, the mass percentage content may be 2%, 3%, 4%, 5%, 6%, 8%, 10%, 12%, 15%, 18%, 20%, 22%, 25% or 28%, etc., further preferably 2%-20%.

In some embodiments of the present application, the G represents-O- or -S-.

In some embodiments of the present application, the L₁ and L₂ represent -F.

In some embodiments of the present application, the compound of formula F is selected from a group consisting of the following compounds: 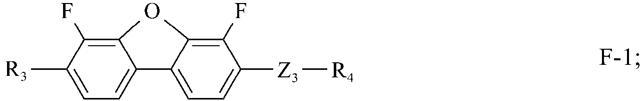 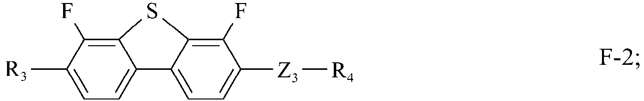 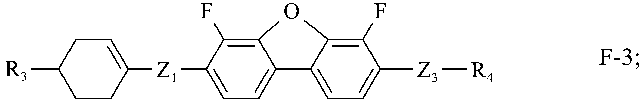 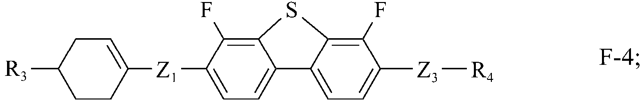 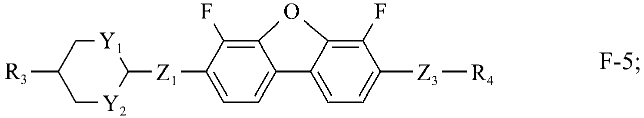 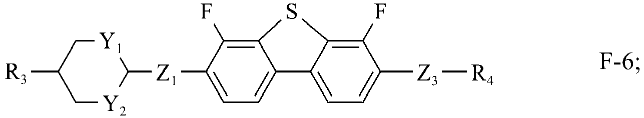 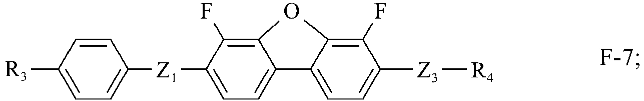 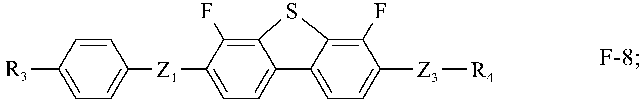 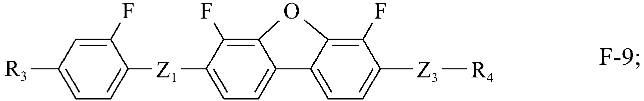 and 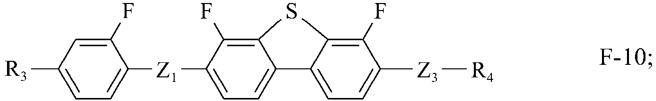
wherein, the R₃, R₄ and Z₃ have the same scopes of definition as those in formula F;
Y₁ and Y₂ each independently represents -O- or -CH₂-.

In some embodiments of the present application, the compound of formula F is selected from at least one (for example, one, two, three, four or five, etc.) compound of a group consisting of the compound of formula F-1 and the compound of formula F-2: 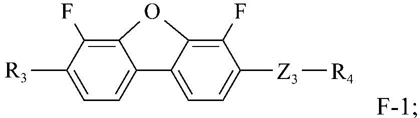 and

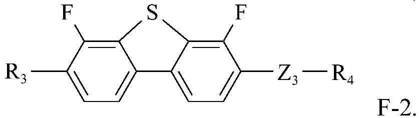

In some embodiments of the present application, the R₃ represents C₁₋₈ (for example, C₁, C₂, C₃, C₄, C₅, C₆, C₇ or C₈) linear alkyl or C₁₋₆ (for example, C₁, C₂, C₃, C₄, C₅ or C₆) linear alkoxy, further preferably C₁₋₆ linear alkoxy.

In some embodiments of the present application, the Z₃ represents single bond, -O-, -OCH₂-or -OCH₂CH₂-.

In some embodiments of the present application, the R₄ represents C₁₋₈ (for example, C₁, C₂, C₃, C₄, C₅, C₆, C₇ or C₈) linear alkyl, C₁₋₆ (for example, C₁, C₂, C₃, C₄, C₅ or C₆) linear alkoxy, 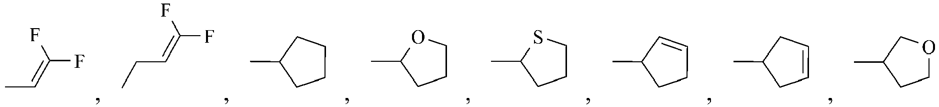 or 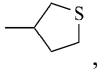 further preferably C₁₋₈ linear alkyl, C₁₋₆ linear alkoxy,

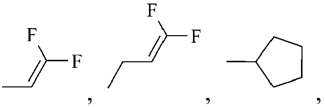

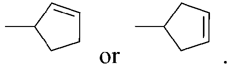

In some embodiments of the present application, the compound of formula F is selected from a group consisting of the following compounds: 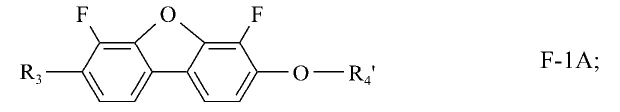 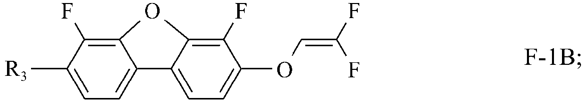 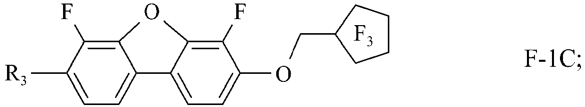 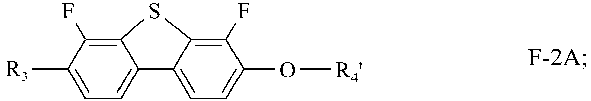 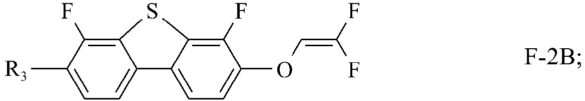 and 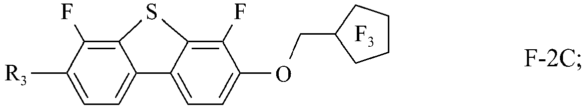
wherein, R₄' represents C₁₋₈ (for example, C₁, C₂, C₃, C₄, C₅, C₆, C₇ or C₈) linear alkyl;
ring 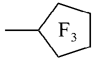 represents 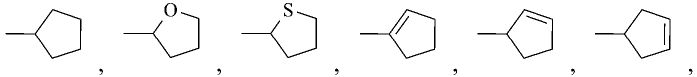 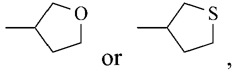 further preferably

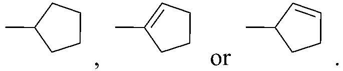

In some embodiments of the present application, the compound of formula N is selected from a group consisting of the following compounds: 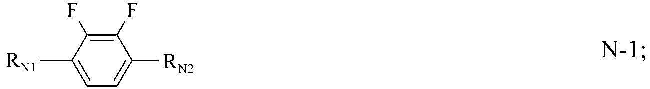 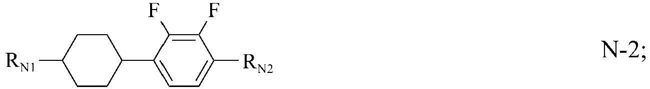 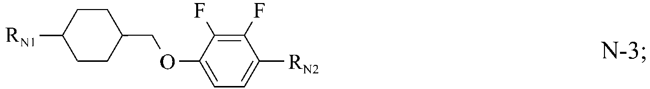 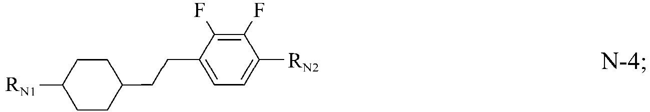 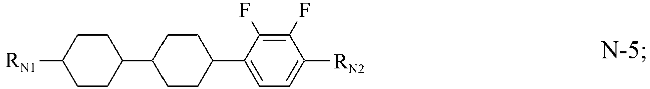 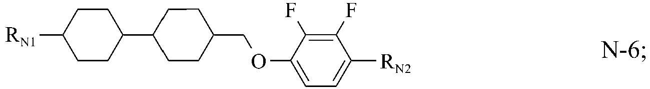 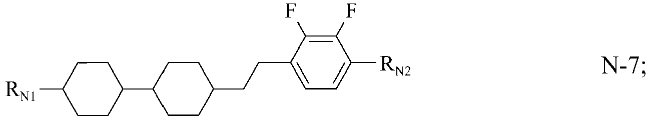 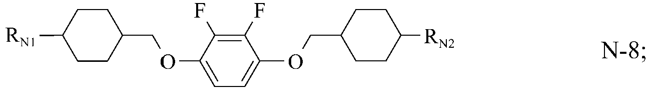 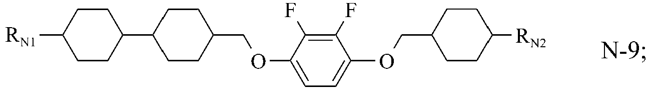 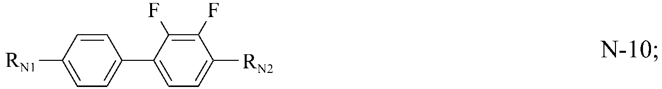 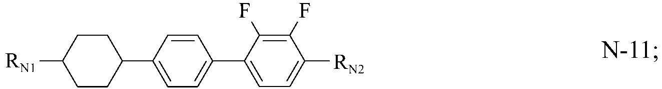 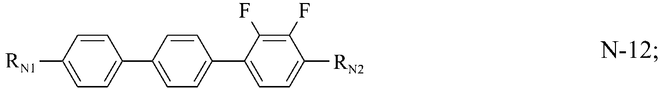 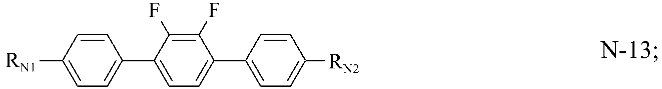 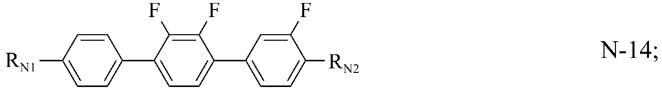 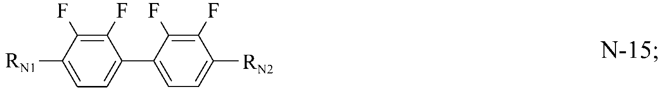 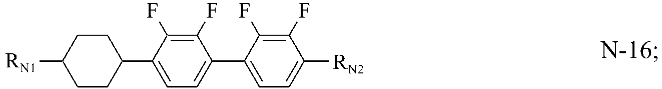 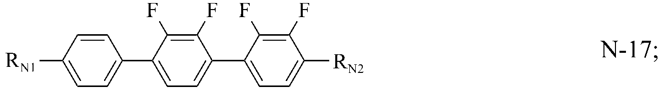 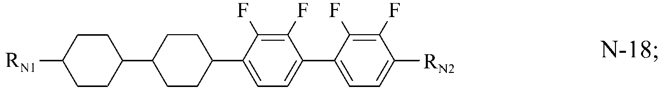 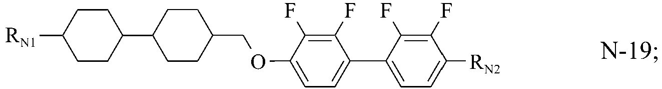 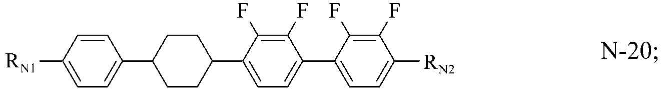 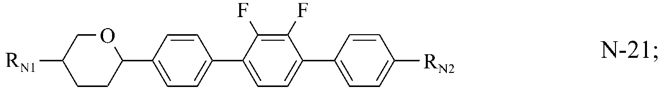 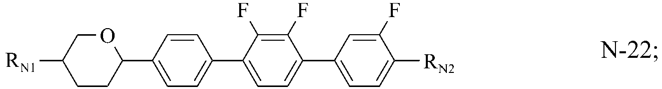 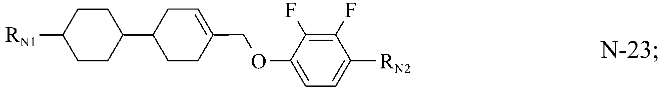 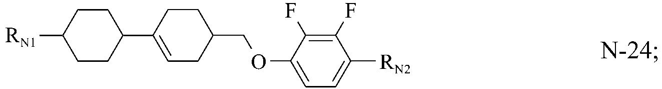 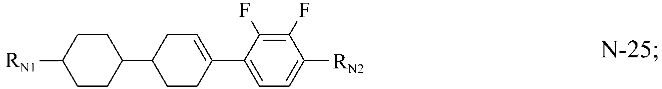 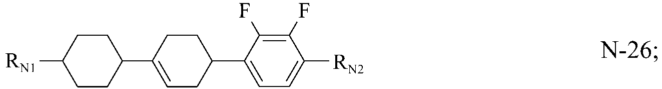 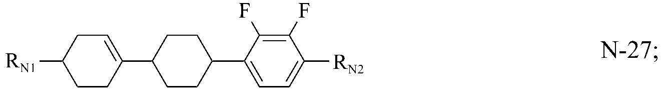 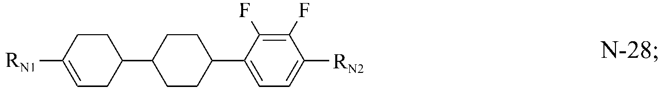 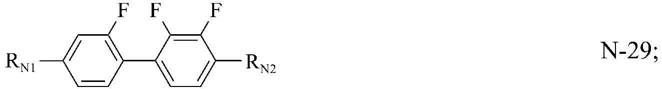 and 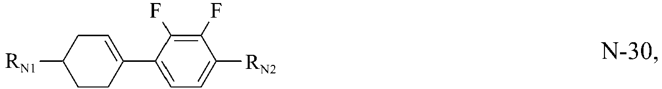 wherein, R_{N1} and R_{N2} have the same scopes of definition as those in formula N.

In some embodiments of the present application, the R_{N1} and R_{N2} each independently represents C₁₋₁₀ (for example, C₁, C₂, C₃, C₄, C₅, C₆, C₇, C₈, C₉ or C₁₀) linear alkyl, C₁₋₉ (for example, C₁, C₂, C₃, C₄, C₅, C₆, C₇, C₈ or C₉) linear alkoxy or C₂₋₉ (for example, C₂, C₃, C₄, C₅, C₆, C₇, C₈ or C₉) linear alkenyl.

In some embodiments of the present application, each R_{N2} independently represents C₁₋₉ linear alkoxy.

In some embodiments of the present application, the compound of formula N comprises at least one (for example, one, two, three, four, five, six, seven or eight, etc.) compound selected from a group consisting of the compound of formula N-2, the compound of formula N-3, the compound of formula N-5, the compound of formula N-6, the compound of formula N-7, the compound of formula N-10, the compound of formula N-11, the compound of formula N-12, the compound of formula N-13, the compound of formula N-23, the compound of formula N-25, the compound of formula N-29 or the compound of formula N-30.

In some embodiments of the present application, the liquid crystal composition comprises at least one compound of formula F and at least one compound of formula N.

In some embodiments of the present application, the mass percentage content of the compound of formula F in the liquid crystal composition is 1%-30%, for example, the mass percentage content may be 3%, 5%, 8%, 10%, 12%, 15%, 18%, 20%, 22%, 25% or 28%, etc., preferably 2%-25%.

In some embodiments of the present application, the mass percentage content of the at least one (for example, one, two, three or four, etc.) compound of formula F selected from a group consisting of the compound of formula F-1 or the compound of formula F-2 is 1%-28%, for example, the mass percentage content may be 3%, 5%, 8%, 10%, 12%, 15%, 18%, 20%, 22%, 25% or 28%, etc., preferably 2%-25%.

In some embodiments of the present application, the mass percentage content of the compound of formula N in the liquid crystal composition is 1%-70%, for example, the mass percentage content may be 5%, 8%, 10%, 15%, 18%, 20%, 22%, 25%, 28%, 30%, 34.5%, 35%, 38%, 40%, 43%, 44%, 45%, 46%, 48.5%, 50%, 52.6%, 53%, 55%, 58%, 60%, 65% or 70%, etc., further preferably 20%-55%.

In some embodiments of the present application, the mass percentage content of the at least one (for example, one, two, three, four, five, six, seven or eight, etc.) compound of formula N selected from a group consisting of the compound of formula N-2, the compound of formula N-3, the compound of formula N-5, the compound of formula N-6, the compound of formula N-7, the compound of formula N-10, the compound of formula N-11, the compound of formula N-12, the compound of formula N-13, the compound of formula N-23, the compound of formula N-25, the compound of formula N-29 or the compound of formula N-30 is 1%-65%, for example, the mass percentage content may be 5%, 8%, 10%, 15%, 18%, 20%, 25%, 28%, 30%, 34.5%, 35%, 38%, 40%, 43%, 44%, 45%, 46%, 48.5%, 50%, 52.6%, 53%, 55%, 58%, 60% or 65%, etc., further preferably 20%-55%.

In some embodiments of the present application, the liquid crystal composition further comprises at least one compound of formula M: 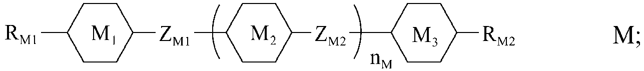
wherein, R_{M1} and R_{M2} each independently represents C₁₋₁₂ (for example, C₁, C₂, C₃, C₄, C₅, C₆, C₇, C₈, C₉, C₁₀, C₁₁ or C₁₂) linear or branched alkyl, 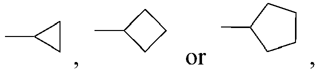 one or at least two nonadjacent -CH₂- in the C₁₋₁₂ linear or branched alkyl can each be independently replaced by -CH=CH-, -C≡C-, -O-, -CO-, -CO-O- or -O-CO-;
ring 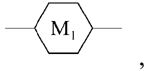 ring 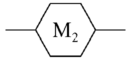 and ring 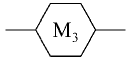 each independently represents 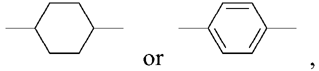 one or at least two -CH₂- in the 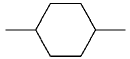 can be replaced by -O-; at most one -H in the 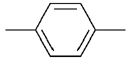 can be substituted by halogen;
Z_{M1} and Z_{M2} each independently represents single bond, -CO-O-, -O-CO-, -CH₂O-, -OCH₂-, - CH=CH-, -CH₂CH₂- or -(CH₂)₄-;
n_{M1} represents 0, 1, 2 or 3, wherein when n_{M1} = 2 or 3, ring 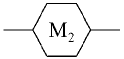 may be the same or different, Z_{M2} may be the same or different.

In some embodiments of the present application, the compound of formula M is selected from a group consisting of the following compounds: 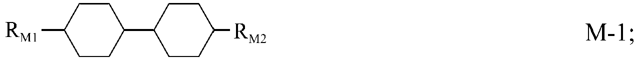 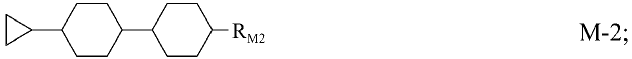 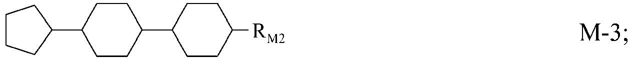 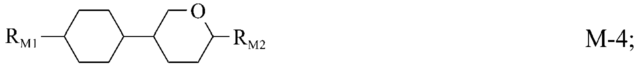 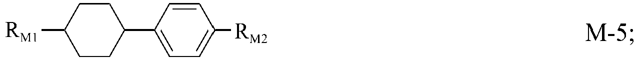 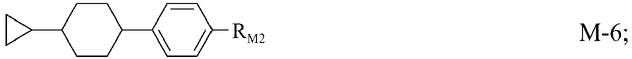 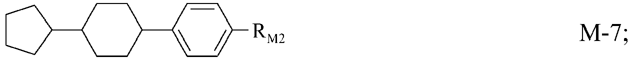 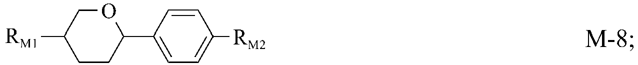 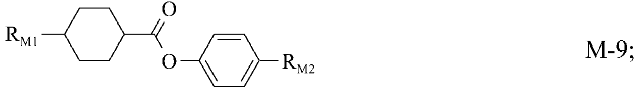 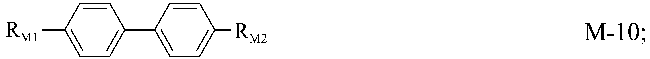 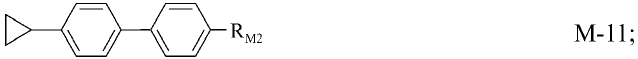 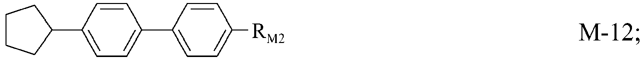 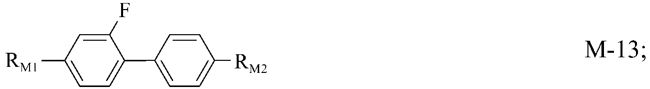 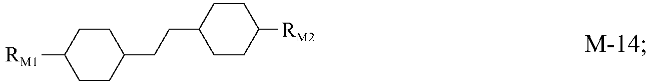 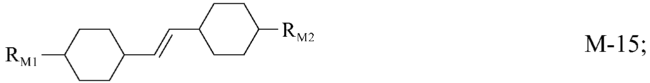 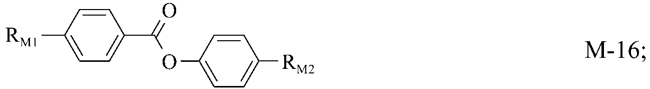 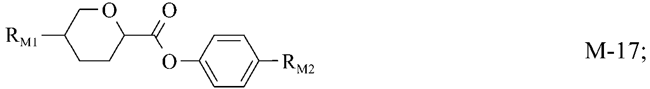 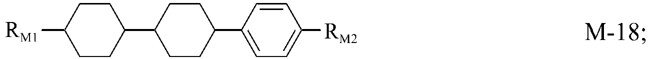 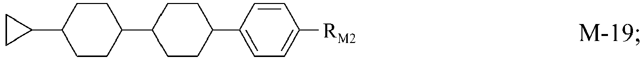 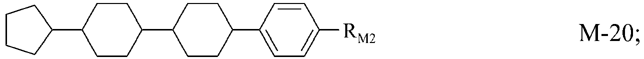 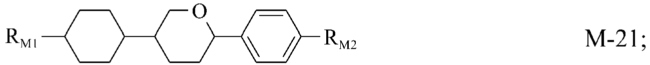 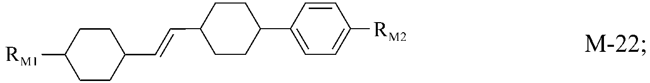 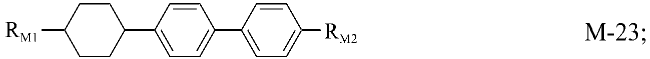 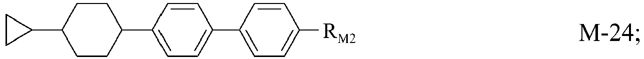 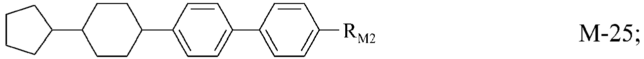 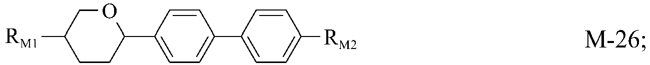 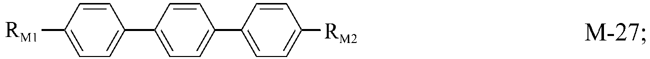 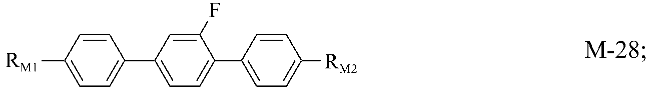 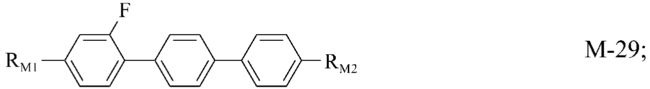 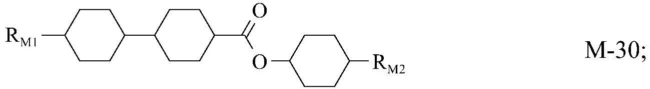 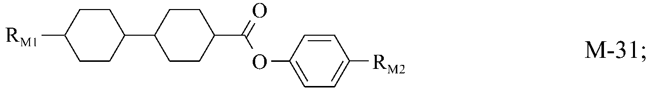 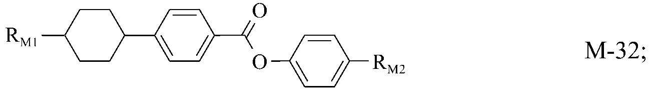 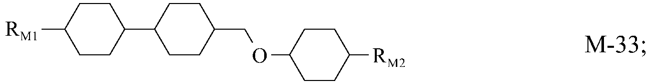 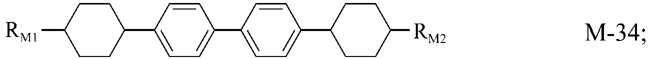 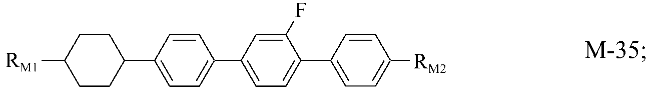 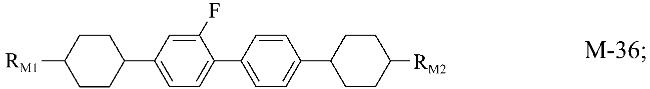 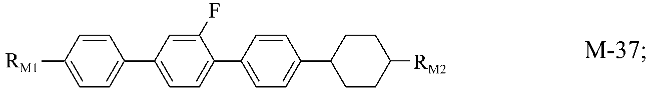 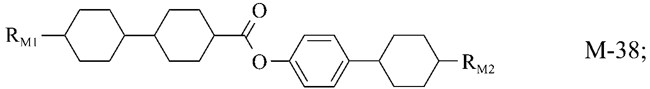 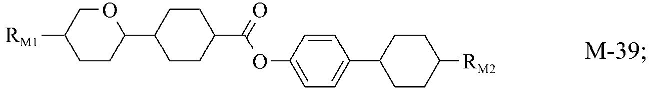 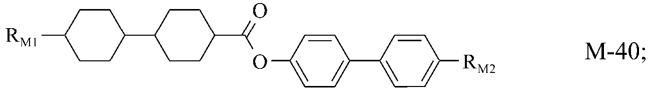 and 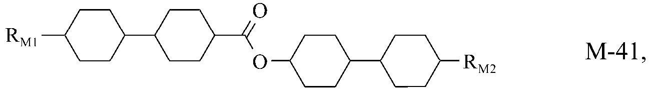 wherein, R_{M1} and R_{M2} each independently represents C₁₋₁₀ (for example, C₁, C₂, C₃, C₄, C₅, C₆, C₇, C₈, C₉ or C₁₀) linear or branched alkyl, one or more than two nonadjacent -CH₂- in the C₁₋₁₀ linear or branched alkyl can each be independently replaced by -CH=CH-, -C≡C-, -O-, -CO-, -CO-O- or -O-CO-.

In some embodiments of the present application, the R_{M1} and R_{M2} each independently represents C₁₋₁₀ (for example, C₁, C₂, C₃, C₄, C₅, C₆, C₇, C₈, C₉ or C₁₀) linear alkyl, C₁₋₉ (for example, C₁, C₂, C₃, C₄, C₅, C₆, C₇, C₈ or C₉) linear alkoxy or C₂₋₉ (for example, C₂, C₃, C₄, C₅, C₆, C₇, C₈ or C₉) linear alkenyl.

In some embodiments of the present application, the compound of formula M comprises at least one (for example, one, two, three, four, five or six, etc.) compound selected from a group consisting of the compound of formula M-1, the compound of formula M-18, the compound of formula M-23 or the compound of formula M-34.

In some embodiments of the present application, the liquid crystal composition comprises at least one (for example, one, two, three or four, etc.) compound of formula M, in which R_{M1} and/or R_{M2} is C₂₋₆ (for example, C₂, C₃, C₄, C₅ or C₆) linear alkenyl, selected from a group consisting of the compound of formula M-1, the compound of formula M-18 or the compound of formula M-23.

In some embodiments of the present application, the liquid crystal composition comprises at least one (for example, one, two, three or four, etc.) compound of formula M-1 in which R_{M1} and/or R_{M2} is C₂₋₆ (for example, C₂, C₃, C₄, C₅ or C₆) linear alkenyl.

The alkenyl group in the present application is preferably the groups represented by any one of formula (V1) to formula (V9), particularly preferably formula (V1), formula (V2), formula (V8) or formula (V9). The groups represented by formula (V1) to formula (V9) are as follows: 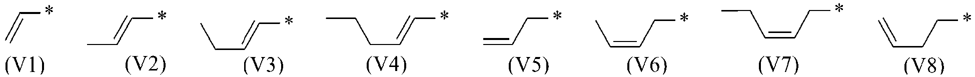 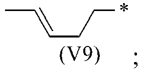 in which, * represents carbon atom that is bound in the ring structure.

In some embodiments of the present application, the mass percentage content of the compound of formula M in the liquid crystal composition is 1%-55%, for example, the mass percentage content may be 2%, 5%, 8%, 10%, 12%, 15%, 16%, 18%, 20%, 22%, 23.5%, 25%, 27.5%, 28%, 29%, 30%, 32%, 34%, 35%, 35.4%, 36%, 38%, 40%, 45%, 46%, 48% or 50%, 52%, 54% or 55%, etc., further preferably 5%-50%.

In some embodiments of the present application, the mass percentage content of the at least one (for example, one, two, three, four, five or six, etc.) compound of formula M selected from a group consisting of the compound of formula M-1, the compound of formula M-18, the compound of formula M-23 or the compound of formula M-34 is 1%-54%, for example, the mass percentage content may be 2%, 5%, 8%, 10%, 12%, 15%, 16%, 18%, 20%, 22%, 23.5%, 25%, 27.5%, 28%, 29%, 30%, 32%, 34%, 35%, 35.4%, 36%, 38%, 40%, 45%, 46%, 48%, 50%, 52% or 54%, etc., further preferably 5%-55%.

In addition to the above compounds, the liquid crystal composition of the present application may also contain any one or a combination of at least two of conventional nematic liquid crystal compounds, smectic liquid crystal compound, cholesteric liquid crystal compound, polymerizable monomer and additive.

In one preferred embodiment, the liquid crystal composition further comprises at least one additive.

In one preferred embodiment, the additive includes any one or a combination of at least two of dopants, antioxidant, ultraviolet absorber, infrared absorber, and other light stabilizers.

It should be noted that the other light stabilizers refer to the light stabilizers different from the compound of formula I-1, the compound of formula I-2, the compound of formula I-3 and the compound of formula I-4.

Possible dopants preferably added to the liquid crystal composition of the present application are shown below. 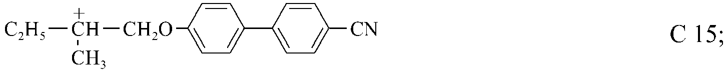 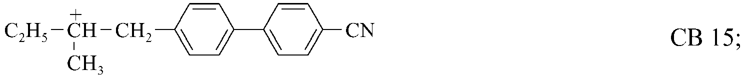 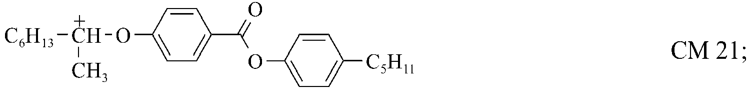 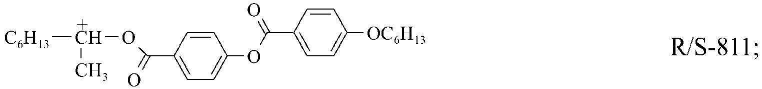 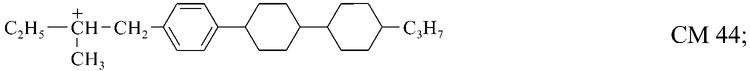 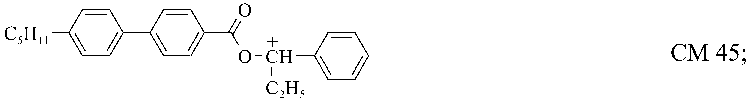 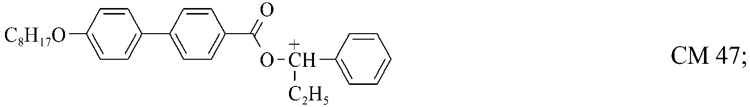 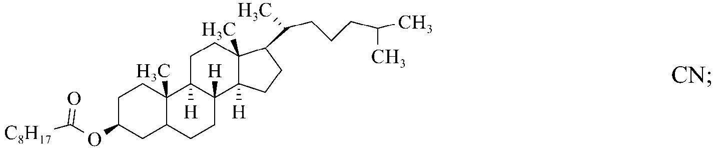 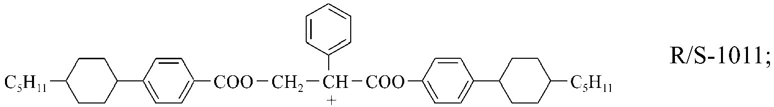 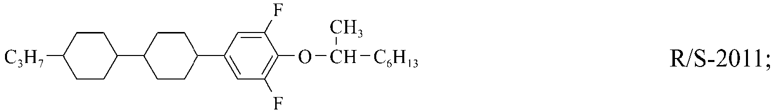 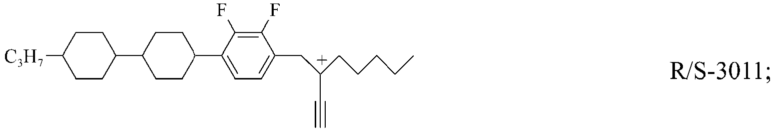 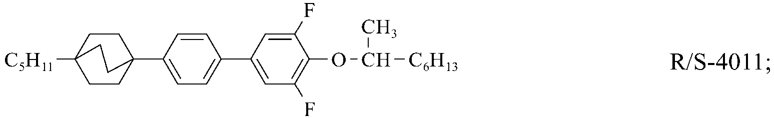 and 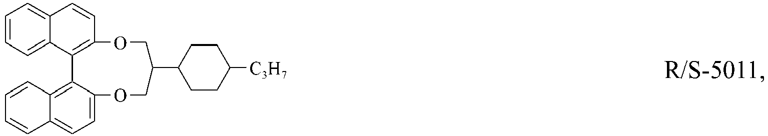 wherein, "+" represents chiral site.

In some embodiments of the present application, the mass percentage content of the dopant in the liquid crystal composition is 0%-5%; preferably, the mass percentage content of the dopant in the liquid crystal composition is 0.01%-1%.

Further, additives (such as antioxidants, other light stabilizers, and the like) used in the liquid crystal composition of the present application are preferably selected from the following substances: 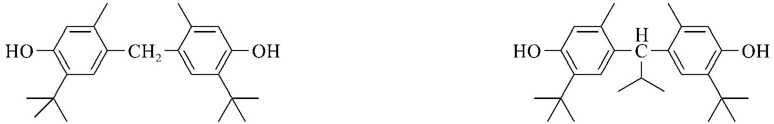 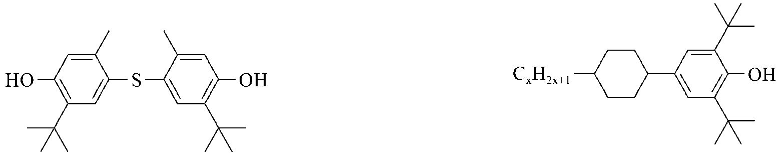 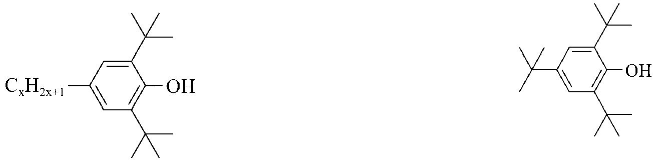 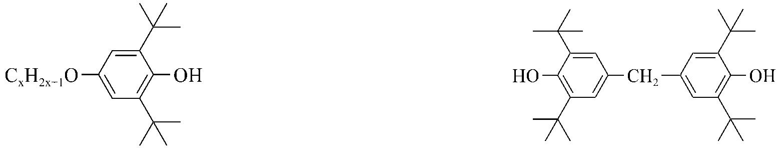 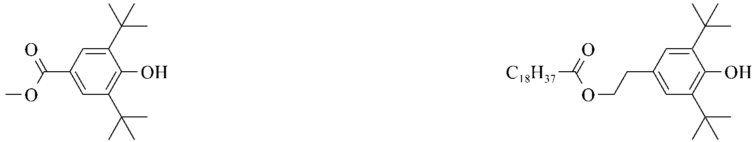 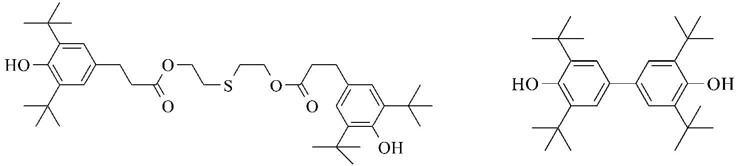 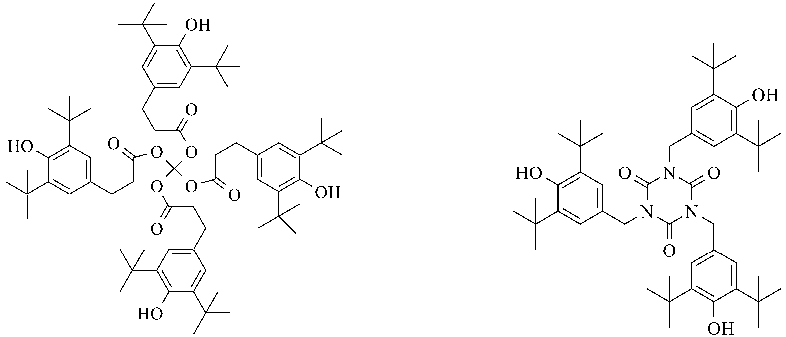 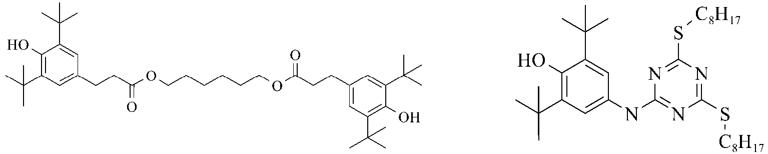 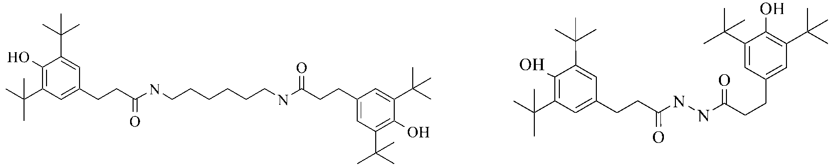 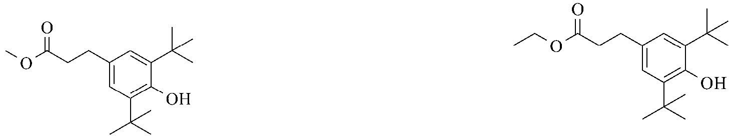 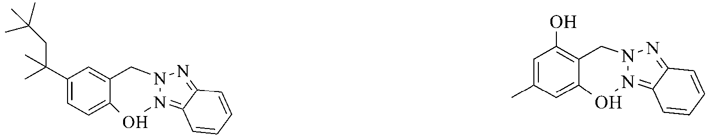 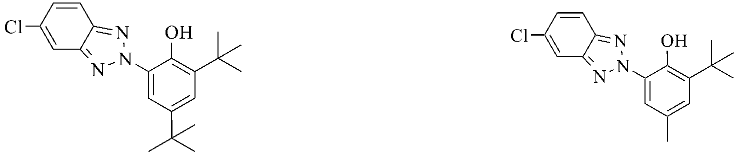 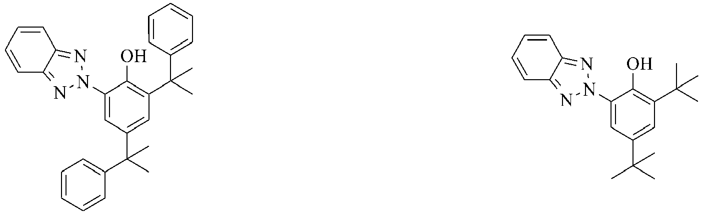 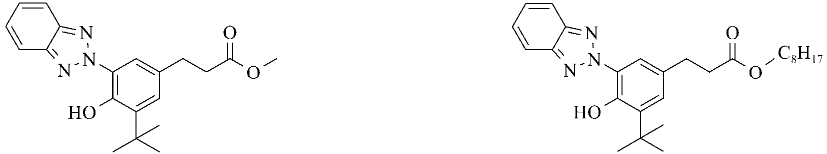 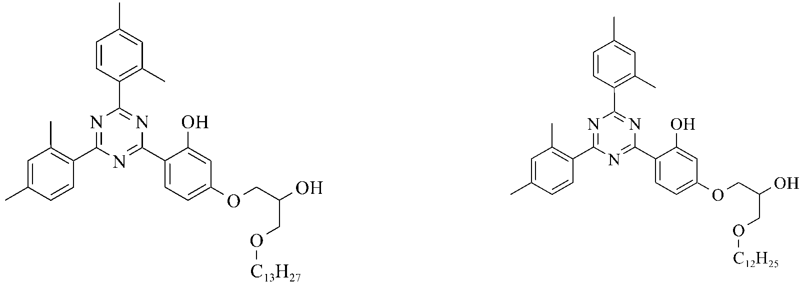 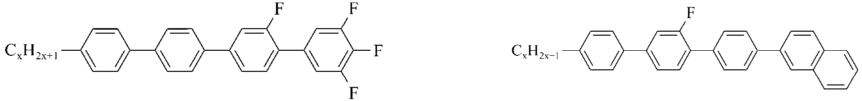 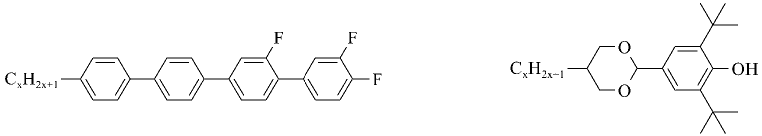 wherein, x represents a positive integer of 1-12.

Exemplarily, the other light stabilizers are selected from the light stabilizers shown below:

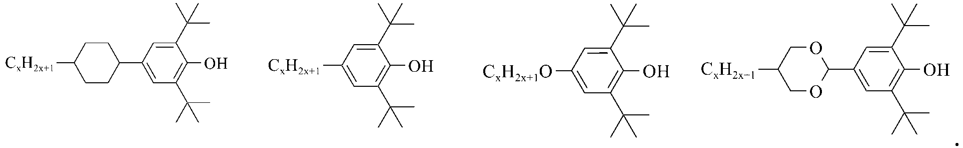

In some embodiments of the present application, the mass percentage content of the other light stabilizers in the liquid crystal composition is 0%-5%; preferably, the mass percentage content of the other light stabilizers in the liquid crystal composition 0.01%-1%, further preferably 0.01%-0.1%.

In the second aspect, the present application provides a liquid crystal display device, the liquid crystal display device comprises the liquid crystal composition of the first aspect.

In one preferred embodiment, the liquid crystal display device adopts any one of VA display mode, PSVA display mode, IPS display mode and NFFS display mode.

Compared with the related technologies, the present application has the following beneficial effects:
In the liquid crystal composition having negative dielectric anisotropy provided by the present application, through the design and compounding synergistic effect of stabilizers and liquid crystal components, the composition possesses excellent clearing point, optical anisotropy and dielectric anisotropy Δε. Meanwhile, it has high elastic constants K₁₁ and K₃₃, low rotational viscosity γ₁, smaller ratio of rotational viscosity to elastic constant γ₁/K₁₁, and smaller ratio of elastic constant to dielectric anisotropy K₁₁/Δε, shorter response time, faster response speed, lower operating voltage and power consumption as well as lower LC light scattering degree. Additionally, it exhibits excellent photoelectric stability and high voltage holding ratio (VHR), which can eliminate image sticking or accelerate the dissipation of image sticking.

Other aspects will be apparent upon reading and understanding the Detailed Description.

### DETAILED DESCRIPTION OF EMBODIMENTS

The technical solutions of the present application will be further illustrated through the detailed embodiments below. Those skilled in the art should understand that the examples are only intended to facilitate understanding of the present application and should not be construed as any limitation thereto.

For the convenience of the expression, the group structures of each component of the liquid crystal compositions in the following Examples and Comparative Examples are represented by the codes listed in Table 1:

**Table 1**

| Structure of group | Code | Name of group | Structure of group | Code | Name of group |
|---|---|---|---|---|---|
| 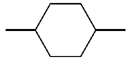 | C | 1,4-cyclohexyl idene | 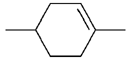 | L | 1,4-cyclohexenyl ene |
| 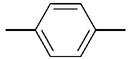 | P | 1,4-phenylene | 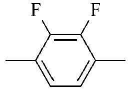 | W | 2,3-difluoro-1,4-phenylene |
| 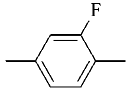 | G | 2-fluoro-1,4-phenylene | 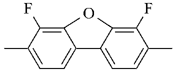 | B(O) | 4,6-difluorodibenzo[b,d]f uran-3,7-diyl |
| -CH₂O-/-OCH₂- | 1O/O1 | methylene oxy | 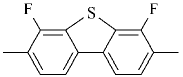 | B(S) | 4,6-difluorodibenzo[b,d]t hiophene-3,7-diyl |
| -O- | O | oxygen bridge group | -CₙH₂ₙ₊₁ or -CₙH₂ₙ- | n (n represent s a positive integer of 1-12) | linear alkyl or linear alkylene |
| 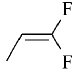 | V(2F) | difluorovin yl | -CH=CH- or -CH=CH₂ | V | vinylidene or vinyl |
| 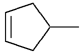 | ((C5)(V)) | cyclopente nyl | 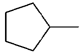 | (C5) | 1-cyclopentyl |

Take the compound with the following structural formula as an example: 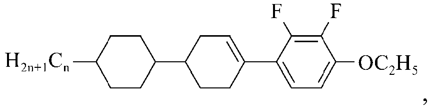 represented by the codes listed in Table 1, this structure can be expressed as nCLWO2, in which, C represents 1,4-cyclohexylidene, L represents 1,4-cyclohexenylene, W represents 2,3-difluoro-1,4-phenylene, n represents the number of carbon atoms of the left alkyl, for example, n is "3", meaning that the alkyl is n-propyl, OC₂H₅ represents ethoxy.

The abbreviated codes of the test items in the following Examples and Comparative Examples are as follows:
- Cp: clearing point (nematic-isotropy phases transition temperature, °C)
- Δn: optical anisotropy (589 nm, 25°C)
- Δε: dielectric anisotropy (1 KHz, 25°C)
- K₁₁: splay elastic constant (25°C)
- K₃₃: bend elastic constant (25°C)
- γ₁: rotational viscosity (mPa·s, 25°C)
- γ₁/K₁₁: the ratio of rotational viscosity to splay elastic constant
- K₁₁/Δε: the ratio of splay elastic constant to dielectric anisotropy
- nₒ: refractive index of ordinary light (589 nm, 25°C)
- nₑ: refractive index of extraordinary light (589 nm, 25°C)
- LC Scattering: extent of light scattering
- IS dissipation time: dissipation time of image sticking (min)

wherein, Cp: measured with MP70 melting point apparatus;
Δn: Δn = nₑ-nₒ, tested using an Abbe Refractometer under a sodium lamp (589 nm) light source at 25°C;
Δε: Δε = ε_{∥} - ε_{⊥}, in which, ε_{∥} is the dielectric constant parallel to the molecular axis; ε_{⊥} is the dielectric constant perpendicular to the molecular axis, test conditions: 25°C, 1 KHz, VA-type test cell with a cell gap of 6 µm;
K₁₁ and K₃₃: calculated from the measured C-V curve of the liquid crystal using LCR meter and a VA-type test cell, test conditions: VA-type test cell with a cell gap of 6 µm, V = 0.1-20 V;
γ₁: measured using an LCM-2 type liquid crystal physical property evaluation system; test conditions: 25°C, 160 V-240 V, test cell gap 20 µm;
LC Scattering: $LC Scattering = \frac{d \cdot {Δn}^{2} \cdot {\left({n}_{e}+{n}_{o}\right)}^{2}}{{K}_{ave}}$; wherein, Kₐᵥₑ = (K₁₁ + K₂₂ + K₃₃)/3, the test methods for K₁₁, K₂₂ and K₃₃ are as described above;
IS dissipation time: using a DMS 505 photoelectric comprehensive tester, applying an oversaturated voltage (13 V) continuously to one FFS cell for 2 hours, followed by application of L₆₄ grayscale voltage; start reading and recording the luminance value at regular time intervals to obtain the time-luminance curve L-t1; applying a low voltage (0.1 V) continuously to another FFS cell for 2 hours, followed by application of L₆₄ grayscale voltage; start reading and recording the luminance value at regular time intervals to obtain the time-luminance curve L-t2; acquiring the relative image sticking dissipation curve ΔL-t by calculating the difference between the two curves L-t1 and L-t2; and recording the time t as IS dissipation time when ΔL equals zero (at this moment, the residual image is deemed to completely disappear), wherein the cell gap of the FFS cell is 3 µm.

The compounds utilized in the following Examples and Comparative Examples can either be synthesized by methods known in the art or be obtained commercially. These synthetic techniques are conventional, and each of the obtained liquid crystal compositions is tested and meets the standards of electronic compound.

The liquid crystal compositions are prepared in accordance with the proportions of each of the liquid crystal compositions in the following Examples and Comparative Examples. The preparation of the liquid crystal compositions is carried out according to the conventional methods in the art, such as mixed and prepared according to the ratios by means of heating, ultrasonic processing, suspending and so forth.

### Comparative Example 1

A liquid crystal composition comprises components in mass percentage contents as shown in the table below, and the performance test results thereof are listed in the table below.

| Component code | | Content (%) | Performance test result | |
|---|---|---|---|---|
| 4OB(S)O1((C5)(V)) | F-2 | 8 | Cp | 80 |
| 2OB(S)O1((C5)(V)) | F-2 | 8 | Δn | 0.108 |
| 3C1OWO2 | N-3 | 1.8 | nₑ | 1.59 |
| 3CLWO2 | N-25 | 9.2 | nₒ | 1.482 |
| 4CLWO2 | N-25 | 6 | Δε | -4.3 |
| 3PWO2 | N-10 | 11 | K₁₁ | 16.1 |
| 3CCV | M-1 | 41 | K₃₃ | 17.4 |
| 1VCPWO2 | N-11 | 8.8 | γ₁ | 89 |
| 3CC1OWO2 | N-6 | 6.2 | γ₁/K₁₁ | 5.528 |
| | | | K₁₁/Δε | -3.744 |
| | | | LC Scattering | 0.028 |
| | | | IS dissipation time | 20.7 |

### Comparative Example 2

A liquid crystal composition comprises components in mass percentage contents as shown in the table below, and the performance test results thereof are listed in the table below.

| Component code | | Content (%) | Performance test result | |
|---|---|---|---|---|
| 3CWO2 | N-2 | 16.5 | Cp | 80 |
| 2CPWO2 | N-11 | 7 | Δn | 0.108 |
| 3CPWO2 | N-11 | 8 | nₑ | 1.59 |
| 3CPWO4 | N-11 | 5.5 | nₒ | 1.482 |
| 3CPWO3 | N-11 | 3.5 | Δε | -4 |
| 3CCWO2 | N-5 | 11 | K₁₁ | 14.4 |
| 4CCWO2 | N-5 | 5 | K33 | 15.5 |
| 2CCWO2 | N-5 | 4 | γ₁ | 112 |
| 3PWO2 | N-10 | 7 | γ₁/K₁₁ | 7.77778 |
| 3CCV | M-1 | 29.5 | K₁₁/Δε | -3.6 |
| 3PPWO4 | N-12 | 1 | LC Scattering | 0.032 |
| 3PPWO2 | N-12 | 2 | IS dissipation time | 20.7 |

### Comparative Example 3

A liquid crystal composition comprises components in mass percentage contents as shown in the table below, and the performance test results thereof are listed in the table below.

| Component code | | Content (%) | Performance test result | |
|---|---|---|---|---|
| 4OB(S)O1((C5)(V)) | F-2 | 8 | Cp | 80 |
| 2OB(S)O1((C5)(V)) | F-2 | 8 | Δn | 0.109 |
| 3C1OWO2 | N-3 | 1.8 | nₑ | 1.59 |
| 3CLWO2 | N-25 | 9.2 | nₒ | 1.481 |
| 4CLWO2 | N-25 | 6 | Δε | -4.3 |
| 3PWO2 | N-10 | 11 | K₁₁ | 15 |
| 3CCV | M-1 | 41 | K₃₃ | 16.9 |
| 1VCPWO2 | N-11 | 8.8 | γ₁ | 89 |
| 3CC1OWO2 | N-6 | 6.2 | γ₁/K₁₁ | 5.9333333 |
| Stabilizer I-1, n = 6, X is -OCH₃ | | 0.01 | K₁₁/Δε | -3.488372 |
| | | | LC Scattering | 0.03 |
| | | | IS dissipation time | 19.4 |

wherein, the amount of the stabilizer is calculated based on amounts of the other liquid crystal components being 100%. Taking Comparative Example 3 as an example, the total amount of the other liquid crystal components is 100%, and the addition amount of the stabilizer is 0.01%. The following Examples and Comparative Examples involving the stabilizer have the same expression for proportions and no further elaboration is provided.

### Example 1

A liquid crystal composition comprises components in mass percentage contents as shown in the table below, and the performance test results thereof are listed in the table below.

| Component code | | Content (%) | Performance test result | |
|---|---|---|---|---|
| 4OB(S)O1((C5)(V)) | F-2 | 8 | Cp | 82 |
| 2OB(S)O1((C5)(V)) | F-2 | 8 | Δn | 0.109 |
| 3C1OWO2 | N-3 | 1.8 | nₑ | 1.59 |
| 3CLWO2 | N-25 | 9.2 | nₒ | 1.481 |
| 4CLWO2 | N-25 | 6 | Δε | -4.3 |
| 3PWO2 | N-10 | 11 | K₁₁ | 16.5 |
| 3CCV | M-1 | 31 | K₃₃ | 17.7 |
| 1VCPWO2 | N-11 | 8.8 | γ₁ | 91 |
| 3CC1OWO2 | N-6 | 6.2 | γ₁/K₁₁ | 5.515151515 |
| 5CL3 | II-2-1 | 5 | K₁₁/Δε | -3.837209302 |
| 3CL5 | II-2-1 | 5 | LC Scattering | 0.028 |
| Stabilizer I-1, n = 6, X is -OCH₃ | | 0.01 | IS dissipation time | 19.3 |

### Example 2

A liquid crystal composition comprises components in mass percentage contents as shown in the table below, and the performance test results thereof are listed in the table below.

| Component code | | Content (%) | Performance test result | |
|---|---|---|---|---|
| 4OB(S)O1((C5)(V)) | F-2 | 8 | Cp | 81 |
| 2OB(S)O1((C5)(V)) | F-2 | 8 | Δn | 0.108 |
| 3C1OWO2 | N-3 | 1.8 | nₑ | 1.59 |
| 3CCWO2 | N-5 | 8 | nₒ | 1.482 |
| 4CCWO2 | N-5 | 6 | Δε | -4.3 |
| 3PWO2 | N-10 | 11 | K₁₁ | 16.2 |
| 3CCV | M-1 | 27.5 | K₃₃ | 17.6 |
| 1VCPWO2 | N-11 | 10 | γ₁ | 89 |
| 3CC1OWO2 | N-6 | 6.2 | γ₁/K₁₁ | 5.4938272 |
| 5CL3 | II-2-1 | 4.5 | K₁₁/Δε | -3.767442 |
| 5CL4 | II-2-1 | 4.5 | LC Scattering | 0.027 |
| 3CL5 | II-2-1 | 4.5 | IS dissipation time | 18.8 |
| Stabilizer I-2, n = 4, X is -O* | | 0.005 | | |

### Example 3

A liquid crystal composition comprises components in mass percentage contents as shown in the table below, and the performance test results thereof are listed in the table below.

| Component code | | Content (%) | Performance test result | |
|---|---|---|---|---|
| 4OB(S)O1((C5)(V))) | F-2 | 8 | Cp | 81 |
| 2OB(S)O1((C5)(V)) | F-2 | 8 | Δn | 0.108 |
| 3C1OWO2 | N-3 | 1.8 | nₑ | 1.59 |
| 3CCWO2 | N-5 | 8 | nₒ | 1.482 |
| 4CCWO2 | N-5 | 6 | Δε | -4.3 |
| 3PWO2 | N-10 | 11 | K₁₁ | 16.2 |
| 3CCV | M-1 | 27.5 | K33 | 17.6 |
| 1VCPWO2 | N-11 | 10 | γ₁ | 89 |
| 3CC1OWO2 | N-6 | 6.2 | γ₁/K₁₁ | 5.49382716 |
| 5CL3 | II-2-1 | 4.5 | K₁₁/Δε | -3.7674419 |
| 5CL4 | II-2-1 | 4.5 | LC Scattering | 0.027 |
| 3CL5 | II-2-1 | 4.5 | IS dissipation time | 18.1 |
| Stabilizer I-1, n = 4, X is -O* | | 0.005 | | |

### Example 4

A liquid crystal composition comprises components in mass percentage contents as shown in the table below, and the performance test results thereof are listed in the table below.

| Component code | | Content (%) | Performance test result | |
|---|---|---|---|---|
| 4OB(S)O1((C5)(V)) | F-2 | 8 | Cp | 81 |
| 2OB(S)O1((C5)(V)) | F-2 | 8 | Δn | 0.108 |
| 3C1OWO2 | N-3 | 1.8 | nₑ | 1.59 |
| 3CCWO2 | N-5 | 8 | nₒ | 1.482 |
| 4CCWO2 | N-5 | 6 | Δε | -4.3 |
| 3PWO2 | N-10 | 11 | K₁₁ | 16.2 |
| 3CCV | M-1 | 27.5 | K33 | 17.6 |
| 1VCPWO2 | N-11 | 10 | γ₁ | 89 |
| 3CC1OWO2 | N-6 | 6.2 | γ₁/K₁₁ | 5.49382716 |
| 5CL3 | II-2-1 | 4.5 | K₁₁/Δε | -3.76744186 |
| 5CL4 | II-2-1 | 4.5 | LC Scattering | 0.027 |
| 3CL5 | II-2-1 | 4.5 | IS dissipation time | 17.5 |
| Stabilizer I-3, X 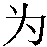 -O* | | 0.005 | | |

### Example 5

A liquid crystal composition comprises components in mass percentage contents as shown in the table below, and the performance test results thereof are listed in the table below.

| Component code | | Content (%) | Performance test result | |
|---|---|---|---|---|
| 2OB(S)OV(2F) | F-2 | 4.5 | Cp | 80 |
| 4OB(S)OV(2F) | F-2 | 4.5 | Δn | 0.109 |
| 3C1OWO2 | N-3 | 2 | nₑ | 1.591 |
| 3CLWO2 | N-25 | 8 | nₒ | 1.481 |
| 2CC1OWO2 | N-6 | 8.2 | Δε | -4.3 |
| 3CWO2 | N-2 | 7 | K₁₁ | 16.2 |
| 1PWO2 | N-10 | 6 | K33 | 18.2 |
| 3CCV | M-1 | 28 | γ₁ | 95 |
| 3CPWO2 | N-11 | 8.8 | γ₁/K₁₁ | 5.864197531 |
| 3CC1OWO2 | N-6 | 6 | K₁₁/Δε | -3.76744186 |
| 3CCV1 | M-1 | 6 | LC Scattering | 0.027 |
| V2CL3 | II-2-3 | 4 | IS dissipation time | 18.4 |
| 3PPWO2 | N-12 | 2 | | |
| 4PPWO2 | N-12 | 2 | | |
| 3PWP2 | N-13 | 3 | | |
| Stabilizer I-4, X is -OH | | 0.0035 | | |

### Example 6

A liquid crystal composition comprises components in mass percentage contents as shown in the table below, and the performance test results thereof are listed in the table below.

| Component code | | Content (%) | Performance test result | |
|---|---|---|---|---|
| 2OB(S)OV(2F) | F-2 | 3.5 | Cp | 90 |
| 4OB(S)OV(2F) | F-2 | 3.5 | Δn | 0.11 |
| 4OB(S)O1((C5)(V)) | F-2 | 6.5 | nₑ | 1.593 |
| 2OB(S)O1((C5)(V)) | F-2 | 6.5 | nₒ | 1.483 |
| 3CLWO2 | N-25 | 8.5 | Δε | -5 |
| 3CC1OWO2 | N-6 | 10 | K₁₁ | 19.1 |
| 3PWO2 | N-10 | 7.5 | K33 | 20.4 |
| 3CCV | M-1 | 25 | γ₁ | 107 |
| VCLWO2 | N-25 | 8.9 | γ₁/K₁₁ | 5.60209 |
| 2CC1OWO2 | N-6 | 7.6 | K₁₁/Δε | -3.82 |
| 5CL3 | II-2-1 | 3 | LC Scattering | 0.024 |
| 5CL4 | II-2-1 | 3 | IS dissipation time | 19.2 |
| 3CL5 | II-2-1 | 3 | | |
| 3PPWO2 | N-12 | 1.5 | | |
| VCLP1 | II-6-3 | 2 | | |
| Stabilizer I-2, n = 2, X is -OH | | 0.004 | | |

### Example 7

A liquid crystal composition comprises components in mass percentage contents as shown in the table below, and the performance test results thereof are listed in the table below.

| Component code | | Content (%) | Performance test result | |
|---|---|---|---|---|
| 2OB(S)OV(2F) | F-2 | 3.5 | Cp | 90 |
| 4OB(S)OV(2F) | F-2 | 3.5 | Δn | 0.11 |
| 4OB(S)O1((C5)(V)) | F-2 | 6.5 | nₑ | 1.593 |
| 2OB(S)O1((C5)(V)) | F-2 | 6.5 | nₒ | 1.483 |
| 3CLWO2 | N-25 | 8.5 | Δε | -5 |
| 3CC1OWO2 | N-6 | 10 | K₁₁ | 19.1 |
| 3PWO2 | N-10 | 7.5 | K33 | 20.4 |
| 3CCV | M-1 | 25 | γ₁ | 107 |
| VCLWO2 | N-25 | 8.9 | γ₁/K₁₁ | 5.6021 |
| 2CC1OWO2 | N-6 | 7.6 | K₁₁/Δε | -3.82 |
| 5CL3 | II-2-1 | 3 | LC Scattering | 0.024 |
| 5CL4 | II-2-1 | 3 | IS dissipation time | 19.9 |
| 3CL5 | II-2-1 | 3 | | |
| 3PPWO2 | N-12 | 1.5 | | |
| VCLP1 | II-6-3 | 2 | | |
| Stabilizer I-2, n = 4, X is -H | | 0.004 | | |

### Example 8

A liquid crystal composition comprises components in mass percentage contents as shown in the table below, and the performance test results thereof are listed in the table below.

| Component code | | Content (%) | Performance test result | |
|---|---|---|---|---|
| 2OB(S)OV(2F) | F-2 | 3.5 | Cp | 90 |
| 4OB(S)OV(2F) | F-2 | 3.5 | Δn | 0.11 |
| 4OB(S)O1((C5)(V)) | F-2 | 6.5 | nₑ | 1.593 |
| 2OB(S)O1((C5)(V)) | F-2 | 6.5 | nₒ | 1.483 |
| 3CLWO2 | N-25 | 8.5 | Δε | -5 |
| 3CC1OWO2 | N-6 | 10 | K₁₁ | 19.1 |
| 3PWO2 | N-10 | 7.5 | K33 | 20.4 |
| 3CCV | M-1 | 25 | γ₁ | 107 |
| VCLWO2 | N-25 | 8.9 | γ₁/K₁₁ | 5.602094241 |
| 2CC1OWO2 | N-6 | 7.6 | K₁₁/Δε | -3.82 |
| 5CL3 | II-2-1 | 3 | LC Scattering | 0.024 |
| 5CL4 | II-2-1 | 3 | IS dissipation time | 18.3 |
| 3CL5 | II-2-1 | 3 | | |
| 3PPWO2 | N-12 | 1.5 | | |
| VCLP1 | II-6-3 | 2 | | |
| Stabilizer I-2, n = 4, X is -O* | 0.004 | | | |

### Example 9

A liquid crystal composition comprises components in mass percentage contents as shown in the table below, and the performance test results thereof are listed in the table below.

| Component code | | Content (%) | Performance test result | |
|---|---|---|---|---|
| 4OB(S)O3 | F-2 | 3.5 | Cp | 90 |
| 3OB(S)O5 | F-2 | 3.5 | Δn | 0.109 |
| 2OB(S)OV(2F) | F-2 | 4.5 | nₑ | 1.592 |
| 4OB(S)OV(2F) | F-2 | 4.5 | nₒ | 1.483 |
| 3CL1OWO2 | N-23 | 8.5 | Δε | -4.9 |
| 3CC1OWO2 | N-6 | 10 | K₁₁ | 19.3 |
| 3OPWO2 | N-10 | 9.5 | K33 | 21.3 |
| 3CCV | M-1 | 23.5 | γ₁ | 101 |
| 3CPWO2 | N-11 | 10 | γ₁/K₁₁ | 5.23316 |
| 3CLWO2 | N-25 | 8.5 | K₁₁/Δε | -3.9388 |
| 3CLV | II-2-2 | 3 | LC Scattering | 0.023 |
| 5CLV | II-2-2 | 3 | IS dissipation time | 17.5 |
| VCL3 | II-2-3 | 3 | | |
| VCL5 | II-2-3 | 3 | | |
| 3LWO2 | N-30 | 2 | | |
| Stabilizer I-3, X is -O* | | 0.005 | | |

### Example 10

A liquid crystal composition comprises components in mass percentage contents as shown in the table below, and the performance test results thereof are listed in the table below.

| Component code | | Content (%) | Performance test result | |
|---|---|---|---|---|
| 4OB(S)O3 | F-2 | 3.5 | Cp | 90 |
| 3OB(S)O5 | F-2 | 3.5 | Δn | 0.109 |
| 2OB(S)OV(2F) | F-2 | 4.5 | nₑ | 1.592 |
| 4OB(S)OV(2F) | F-2 | 4.5 | nₒ | 1.483 |
| 3CL1OWO2 | N-23 | 8.5 | Δε | -4.9 |
| 3CC1OWO2 | N-6 | 10 | K₁₁ | 19.3 |
| 3OPWO2 | N-10 | 9.5 | K₃₃ | 21.3 |
| 3CCV | M-1 | 23.5 | γ₁ | 101 |
| 3CPWO2 | N-11 | 10 | γ₁/K₁₁ | 5.23316 |
| 3CLWO2 | N-25 | 8.5 | K₁₁/Δε | -3.9388 |
| 3CLV | II-2-2 | 3 | LC Scattering | 0.023 |
| 5CLV | II-2-2 | 3 | IS dissipation time | 17.4 |
| VCL3 | II-2-3 | 3 | | |
| VCL5 | II-2-3 | 3 | | |
| 3LWO2 | N-30 | 2 | | |
| Stabilizer I-3, X is -O* | | 0.01 | | |

### Example 11

A liquid crystal composition comprises components in mass percentage contents as shown in the table below, and the performance test results thereof are listed in the table below.

| Component code | | Content (%) | Performance test result | |
|---|---|---|---|---|
| 4OB(S)O3 | F-2 | 3.5 | Cp | 90 |
| 3OB(S)O5 | F-2 | 3.5 | Δn | 0.109 |
| 2OB(S)OV(2F) | F-2 | 4.5 | nₑ | 1.592 |
| 4OB(S)OV(2F) | F-2 | 4.5 | nₒ | 1.483 |
| 3CL1OWO2 | N-23 | 8.5 | Δε | -4.9 |
| 3CC1OWO2 | N-6 | 10 | K₁₁ | 19.3 |
| 3OPWO2 | N-10 | 9.5 | K₃₃ | 21.3 |
| 3CCV | M-1 | 23.5 | γ₁ | 101 |
| 3CPWO2 | N-11 | 10 | γ₁/K₁₁ | 5.233161 |
| 3CLWO2 | N-25 | 8.5 | K₁₁/Δε | -3.93878 |
| 3CLV | II-2-2 | 3 | LC Scattering | 0.023 |
| 5CLV | II-2-2 | 3 | IS dissipation time | 17.9 |
| VCL3 | II-2-3 | 3 | | |
| VCL5 | II-2-3 | 3 | | |
| 3LWO2 | N-30 | 2 | | |
| Stabilizer I-3, X is -O* | | 0.025 | | |

### Example 12

A liquid crystal composition comprises components in mass percentage contents as shown in the table below, and the performance test results thereof are listed in the table below.

| Component code | | Content (%) | Performance test result | |
|---|---|---|---|---|
| 1VPWO2 | N-10 | 4 | Cp | 83 |
| 4OB(O)O1C(5) | F-1 | 8 | Δn | 0.107 |
| 4OB(S)O4 | F-2 | 4 | nₑ | 1.589 |
| 4OB(S)O5 | F-2 | 4 | nₒ | 1.482 |
| 3CC2WO2 | N-7 | 8 | Δε | -4.1 |
| 3CCWO2 | N-5 | 8 | K₁₁ | 15.5 |
| 4CCWO2 | N-5 | 6 | K₃₃ | 19.8 |
| V2PWO2 | N-10 | 5 | γ₁ | 86 |
| V2GWO2 | N-29 | 5 | γ₁/K₁₁ | 5.548387 |
| 3CCV | M-1 | 29 | K₁₁/Δε | -3.78049 |
| VCCWO2 | N-5 | 10 | LC Scattering | 0.026 |
| 3CC1OWO2 | N-6 | 0 | IS dissipation time | 17.6 |
| 3CL2V | II-2-2 | 4 | | |
| V2CL3 | II-2-3 | 5 | | |
| Stabilizer I-1, n = 6, X is -O* | | 0.0025 | | |
| Stabilizer I-3, X is -O* | | 0.0025 | | |

### Example 13

A liquid crystal composition comprises components in mass percentage contents as shown in the table below, and the performance test results thereof are listed in the table below.

| Component code | | Content (%) | Performance test result | |
|---|---|---|---|---|
| 4OB(S)O1((C5)(V)) | F-2 | 4.5 | Cp | 113 |
| 2OB(S)O1((C5)(V)) | F-2 | 5 | Δn | 0.101 |
| 2CC1OWO2 | N-6 | 7 | nₑ | 1.588 |
| 3CC1OWO2 | N-6 | 7 | nₒ | 1.487 |
| 3CLWO2 | N-25 | 9 | Δε | -3.5 |
| 4CLWO2 | N-25 | 9 | K₁₁ | 21.2 |
| 3CLWO3 | N-25 | 6.5 | K₃₃ | 22 |
| 4CC3 | M-1 | 5 | γ₁ | 125 |
| 3CLP1 | II-6-1 | 4.5 | γ₁/K₁₁ | 5.896226 |
| 3CLV | II-2-2 | 5.5 | K₁₁/Δε | -6.05714 |
| 3CCV | M-1 | 14 | LC Scattering | 0.019 |
| V2CCP1 | M-18 | 3 | IS dissipation time | 17.1 |
| 3CCV1 | M-1 | 12 | | |
| 5CCV1 | M-1 | 4 | | |
| 3CPP2 | M-23 | 4 | | |
| Stabilizer I-1, n = 4, X is -O* | | 0.004 | | |

### Example 14

A liquid crystal composition comprises components in mass percentage contents as shown in the table below, and the performance test results thereof are listed in the table below.

| Component code | | Content (%) | Performance test result | |
|---|---|---|---|---|
| 4OB(S)O2 | F-2 | 4.3 | Cp | 100 |
| 5OB(S)O2 | F-2 | 4.3 | Δn | 0.099 |
| 3CPPC3 | M-34 | 1.9 | nₑ | 1.582 |
| 3CWO2 | N-25 | 12.7 | nₒ | 1.483 |
| 2CPWO2 | N-11 | 3 | Δε | -4.1 |
| 3CPWO2 | N-11 | 3 | K₁₁ | 16.7 |
| 3CCWO2 | N-5 | 7.1 | K₃₃ | 18.8 |
| 5CCWO2 | N-5 | 7 | γ₁ | 109 |
| 4CCWO2 | N-5 | 7 | γ₁/K₁₁ | 6.526946 |
| 2CCWO2 | N-5 | 7.4 | K₁₁/Δε | -4.07317 |
| 3CLWO3 | N-25 | 5.4 | LC Scattering | 0.022 |
| 3CL5 | II-2-1 | 3.4 | IS dissipation time | 17.8 |
| VCCP1 | M-18 | 6 | | |
| 3CCV | M-1 | 27.5 | | |
| Stabilizer I-3, X is -O* | | 0.003 | | |

Comparative Example 2 contains the compound of formula N of the present application but does not contain the compound of formula II. Comparative Example 1 contains the compound of formula F and the compound of formula N of the present application, but does not contain the compound of formula II of the present application. Compared with Comparative Example 2, Comparative Example 1 has a smaller γ₁/K₁₁ and a smaller K₁₁/Δε, while having an equivalent IS dissipation time. On the basis of Comparative Example 1, Comparative Example 3 further includes the compound of formula I of the present application. Although the IS dissipation time is improved, the γ₁/K₁₁ and K₁₁/Δε are compromised. It can be seen from the comparison with Comparative Examples 1-3 that through the design and compounding of stabilizer with specific structure and the cyclohexenyl-containing compound of formula II, the compound of formula F and/or the compound of formula N, Example 1 of the present application has excellent clearing point, optical anisotropy and dielectric anisotropy Δε while having higher elastic constants K₁₁ and K₃₃, a lower rotational viscosity γ₁, a smaller rotational viscosity-to-elastic constant ratio γ₁/K₁₁, and a smaller elastic constant-to-dielectric anisotropy ratio K₁₁/Δε, has a shorter response time and a faster response speed, a lower operating voltage and power consumption, as well as reduced LC scattering, and a shorter IS dissipation time, and can eliminate image sticking or accelerate the dissipation of image sticking.

Further, it can be seen from Examples 2, 3 and 4 that compared with the difunctional stabilizers of formula I-1 and formula I-2, the liquid crystal composition containing the trifunctional stabilizer of formula I-3 has a shorter IS dissipation time and exhibits better performance in eliminating image sticking and accelerating the dissipation of image sticking. It can be seen from Examples 6, 7 and 8 that the stabilizer with the terminal group X being an oxygen radical can more effectively eliminate the internal electric field and promote the rapid dissipation of residual image. It can be seen from Examples 9, 10 and 11 that the stabilizer with specific structure in the liquid crystal composition of the present application can achieve excellent effects even at a low content. In view of cost considerations, the content of the stabilizer is preferably 0.001 %-0.1 %, and further preferably 0.001%-0.01%.

In summary, through the introduction of the stabilizer with specific structure and the formulation with specific liquid crystal components, the liquid crystal composition of the present application, on the basis of having excellent clearing point, optical anisotropy and dielectric anisotropy Δε, has higher elastic constant K value (K₁₁ is 15.5 to 21.2, and K₃₃ is 17.6 to 22), a lower rotational viscosity (γ₁ is 86-125 mPa·s), a smaller rotational viscosity-to-elastic constant ratio (γ₁/K₁₁ is 5.2-6.5) which indicates a short response time and a fast response speed, a smaller elastic constant-to-dielectric anisotropy ratio (K₁₁/Δε is -3.76 to -7.1), which indicates low driving voltage and power consumption, a lower LC scattering (LC scattering is 0.019-0.028), and the IS dissipation time being 17.1-19.9 minutes, can rapidly eliminate image sticking and exhibit excellent photoelectric stability.

The Applicant declares that the present application illustrates the liquid crystal composition with negative dielectric anisotropy and the liquid crystal display device comprising the same through the above examples. However, the present application is not limited to the above examples, that is, it does not mean that the present application must be implemented relying solely on the above examples. Those skilled in the art shall understand that any improvement to the present application, equivalent replacement of raw materials for the product of the present application, addition of auxiliary components, and selection of specific implementation modes shall all fall within the protection scope and disclosure scope of the present application.

## Claims

1. A liquid crystal composition having negative dielectric anisotropy, comprising:
at least one stabilizer, the stabilizer is selected from a group consisting of the following compounds: 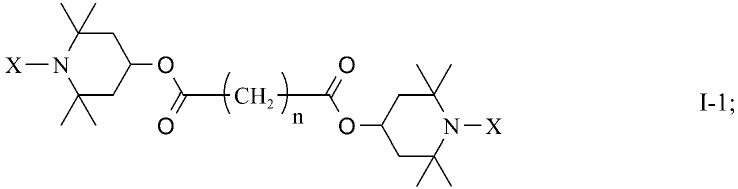 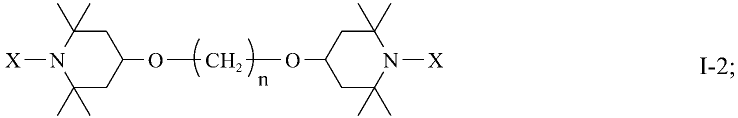 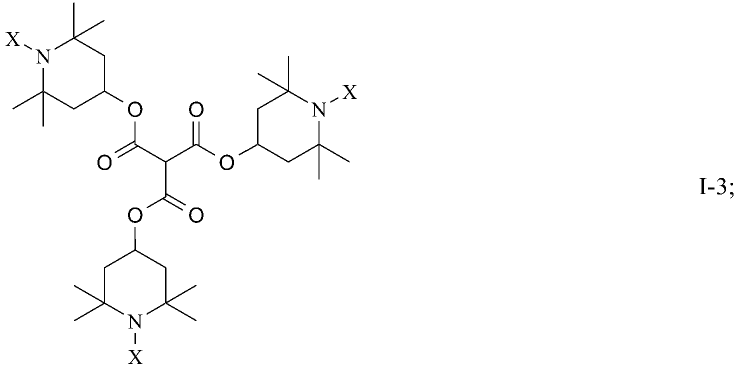 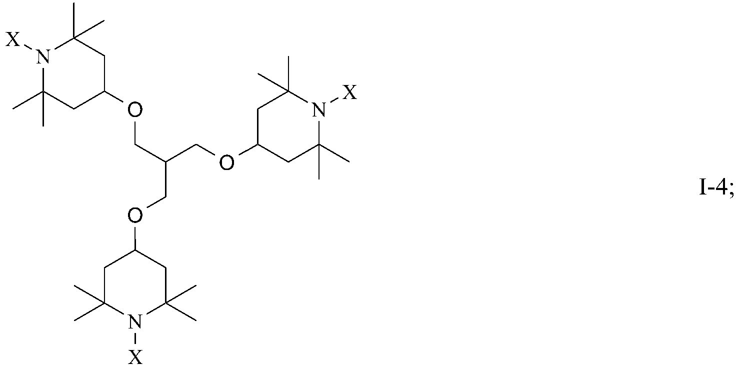
at least one compound of formula II: 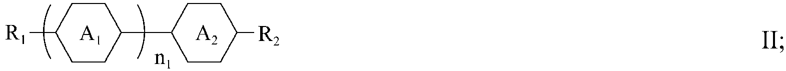 and
at least one compound of formula F and/or formula N: 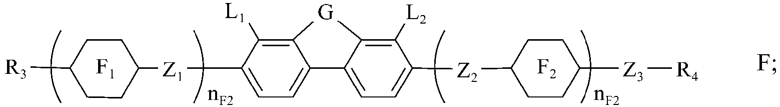 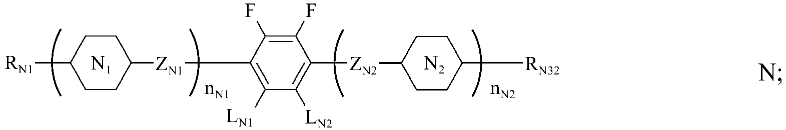
wherein, X represents -H, -OH, -O*, C₁₋₅ linear or branched alkyl; one or at least two nonadjacent -CH₂- in the C₁₋₅ linear or branched alkyl can each be independently replaced by -O- or -CO-; -O* represents oxygen radical;
R₁ and R₂ each independently represents C₁₋₁₂ linear or branched alkyl, 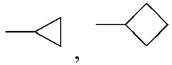 or 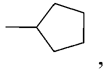 one or at least two nonadjacent -CH₂- in the C₁₋₁₂ linear or branched alkyl can each be independently replaced by -CH=CH-, -C=C-, -O-, -CO-, -CO-O- or -O-CO-;
R₃ and R₄ each independently represents -H, halogen, C₁₋₁₂ linear or branched alkyl, 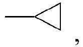 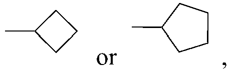 one or at least two nonadjacent -CH₂- in the C₁₋₁₂ linear or branched alkyl, 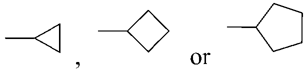 can each be independently replaced by -CH=CH-, - C≡C-, -O-, -S-, -CO-, -CO-O- or -O-CO-, one or at least two -H in the above groups can each be independently substituted by -F or -Cl;
R_{N1} and R_{N2} each independently represents C₁₋₁₂ linear or branched alkyl, 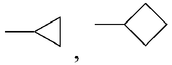 or 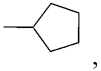 one or at least two nonadjacent -CH₂- in the C₁₋₁₂ linear or branched alkyl can each be independently replaced by -CH=CH-, -C=C-, -O-, -CO-, -CO-O- or -O-CO-;
ring 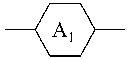 and ring 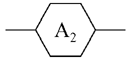 each independently represents 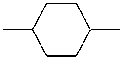 or 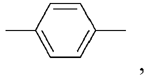 one or at least two -CH₂- in the 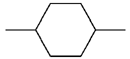 can be replaced by -O-, one or at most two single bonds in the rings can be replaced by double bond; at most one -H in the 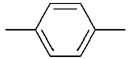 can be substituted by halogen, at least one ring 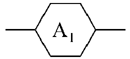 or ring 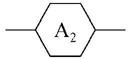 each independently represents 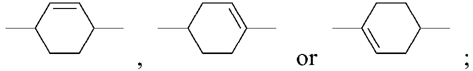
ring 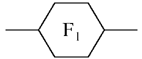 and ring 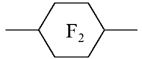 each independently represents 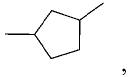 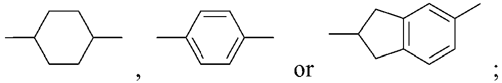 one or at least two -CH₂- in the 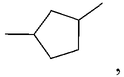 the 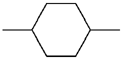 or the 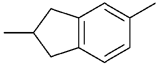 can be replaced by -O-, one or at most two single bonds in the rings can be replaced by double bond; one or at least two -H in the 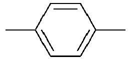 or the 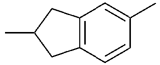 can be substituted by -F, -Cl, -CN, -CH₃ or -OCH₃, one or at least two -CH= in the rings can be replaced by -N=;
ring 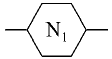 and ring 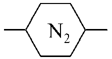 each independently represents 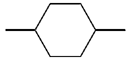 or 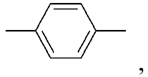 wherein one or at least two -CH₂- in 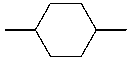 can be replaced by -O-, one or at most two single bonds in the rings can be replaced by double bond, wherein one or at least two -H in 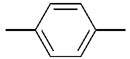 can each be independently substituted by -F, -Cl or -CN, one or at least two -CH= in the rings can be replaced by -N=;
G represents -O-, -S-, -CO-, -CF₂-, -NH- or -NF-;
L₁ and L₂ each independently represents -H, halogen, C₁₋₃ halogenated or unhalogenated alkyl or C₁₋₃ halogenated or unhalogenated alkoxy;
L_{N1} and L_{N2} each independently represents -H, halogen, C₁₋₃ linear or branched alkyl or C₁₋₃ linear or branched alkoxy;
Z₁, Z₂, Z_{N1} and Z_{N2} each independently represents single bond, -O-, -S-, -CO-O-, -O-CO-, - CH₂O-, -OCH₂-, -CH=CH-, -C≡C-, -CH₂CH₂-, -CF₂CF₂-, -(CH₂)₄-, -CF₂O- or -OCF₂-;
Z₃ represents single bond, -O(CH₂)ₐ- or -S(CH₂)ₐ-;
a represents an integer of 0-5;
n represents an integer of 1-20;
n₁ represents 1 or 2; when n₁ = 2, ring 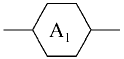 can be the same or different;
n_{F1} and n_{F2} each independently represents 0, 1 or 2; when n_{F1} = 2, ring 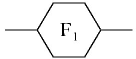 can be the same or different, Z₁ can be the same or different; when n_{F2} = 2, ring 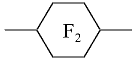 can be the same or different, Z₂ can be the same or different;
n_{N1} represents 0, 1, 2 or 3, n_{N2} represents 0 or 1, and 0 ≤ n_{N1} + n_{N2} ≤ 3;
when n_{N1} represents 2 or 3, ring 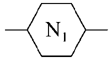 can be the same or different, Z_{N1} can be the same or different.

2. The liquid crystal composition according to claim 1, **characterized in that**, the X represents - H, -OH, -O*, C₁₋₅ linear or branched alkyl, C₁₋₅ linear or branched alkoxy or C₁₋₅ linear or branched acyl.

3. The liquid crystal composition according to claim 1, wherein the mass percentage content of the stabilizer in the liquid crystal composition is 0.001%-0.1%.

4. The liquid crystal composition according to claim 1, wherein the compound of formula II is selected from a group consisting of the following compounds: 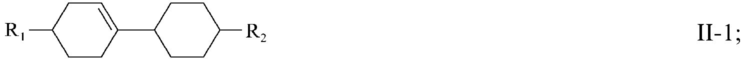 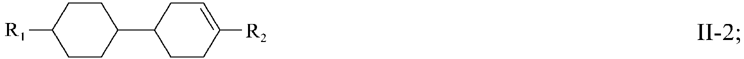 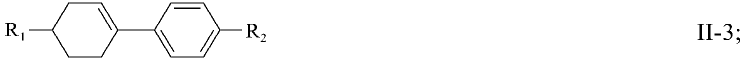 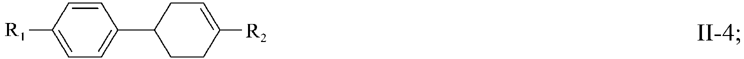 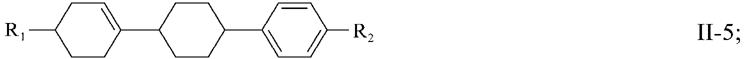 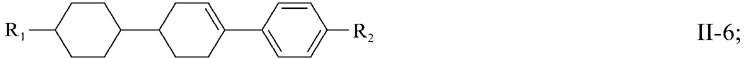 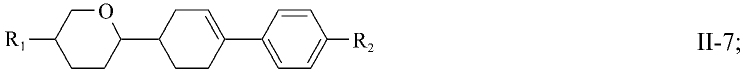 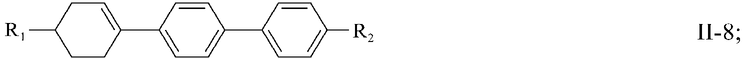 and 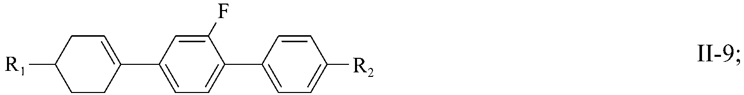 wherein, the R₁ and R₂ have the same scopes of definition as those in formula II.

5. The liquid crystal composition according to claim 1, wherein the compound of formula F is selected from a group consisting of the following compounds: 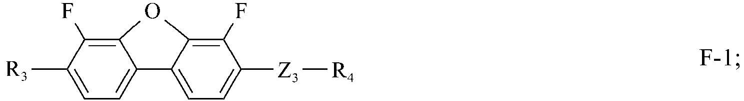 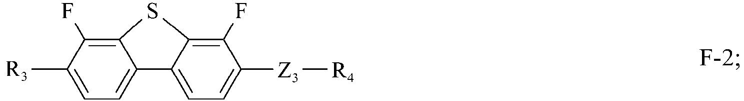 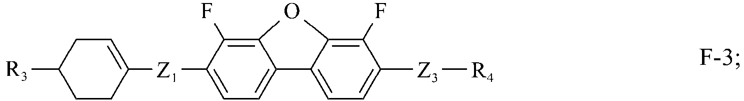 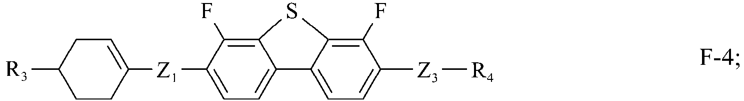 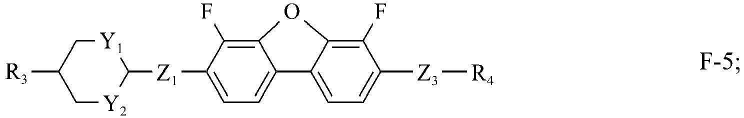 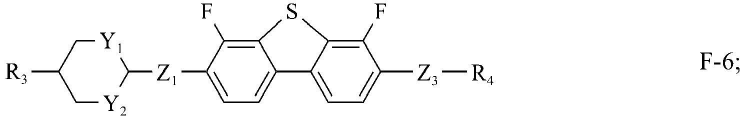 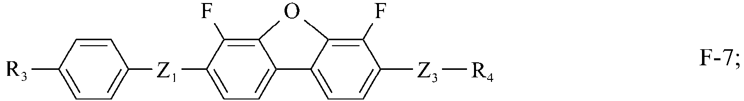 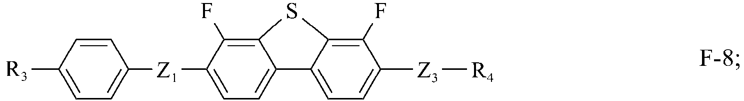 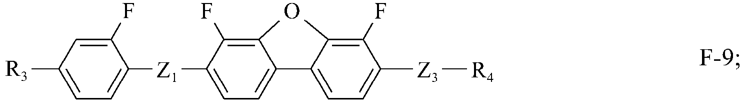 and 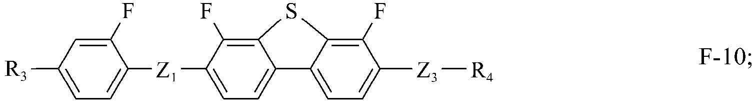
wherein, the R₃, R₄ and Z₃ have the same scopes of definition as those in formula F;
Y₁ and Y₂ each independently represents -O- or -CH₂-.

6. The liquid crystal composition according to claim 1, wherein the compound of formula N is selected from a group consisting of the following compounds: 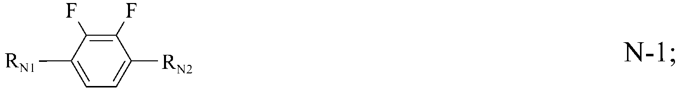 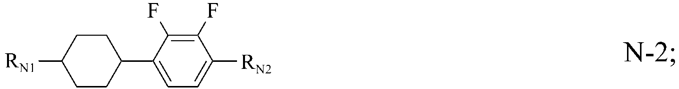 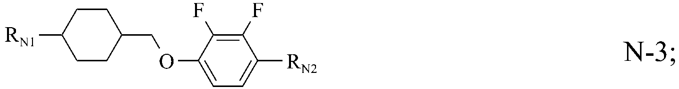 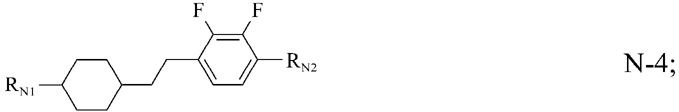 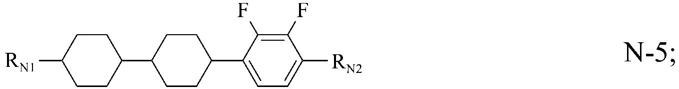 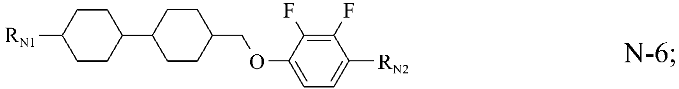 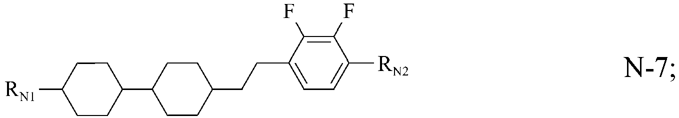 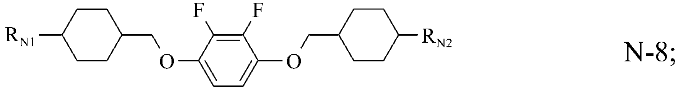 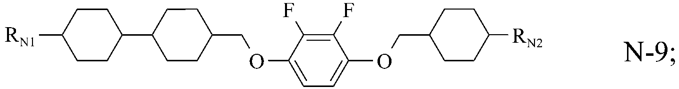 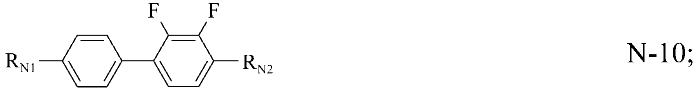 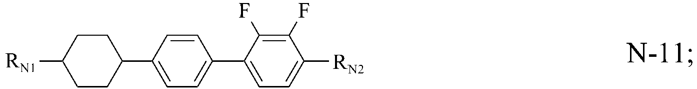 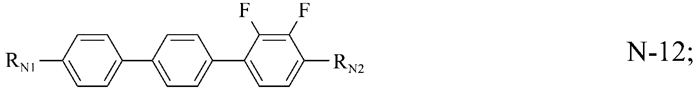 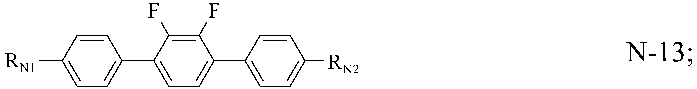 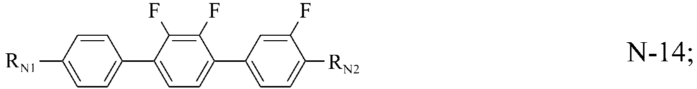 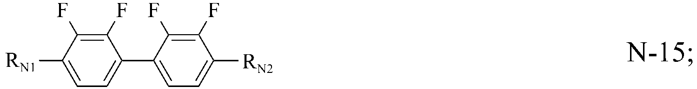 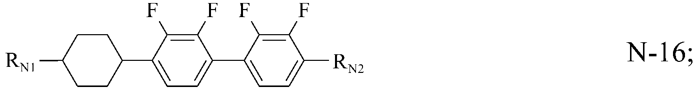 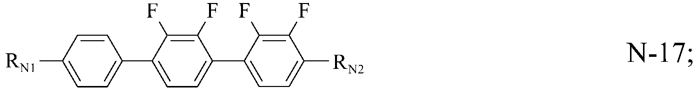 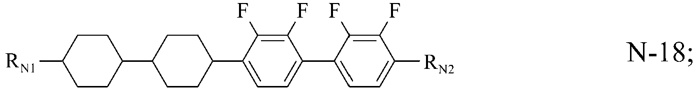 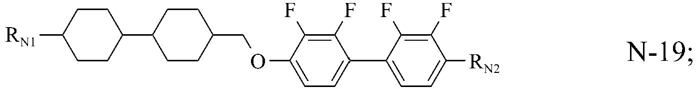 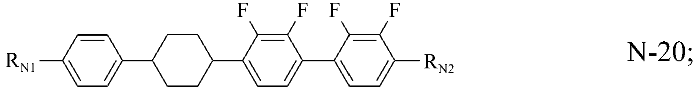 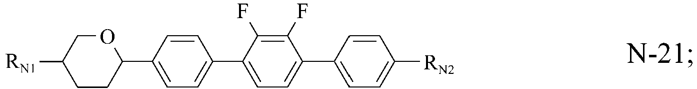 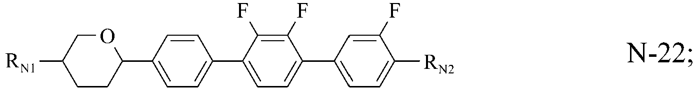 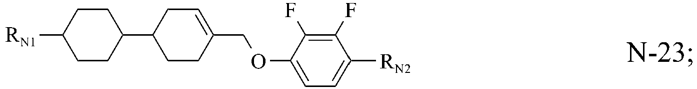 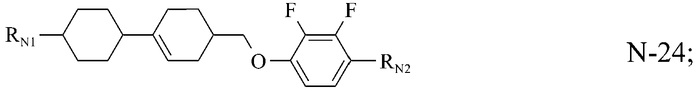 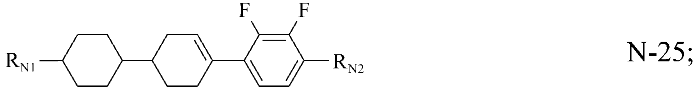 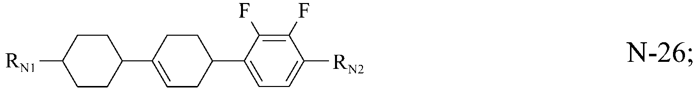 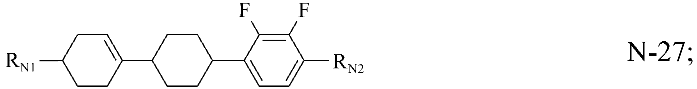 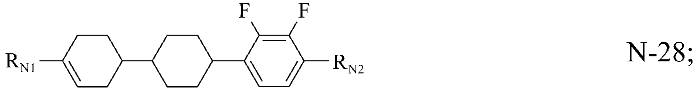 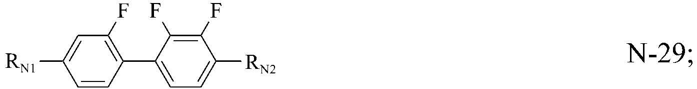 and 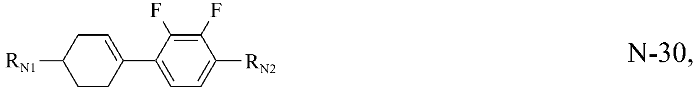 wherein, R_{N1} and R_{N2} have the same scopes of definition as those in formula N.

7. The liquid crystal composition according to claim 1, wherein the liquid crystal composition comprises at least one compound of formula F and at least one compound of formula N; preferably, the mass percentage content of the compound of formula F in the liquid crystal composition is 1%-30%;
preferably, the mass percentage content of the compound of formula N in the liquid crystal composition is 1%-70%.

8. The liquid crystal composition according to claim 1, wherein the liquid crystal composition further comprises at least one compound of formula M: 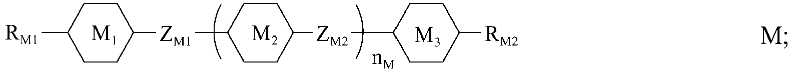
wherein, R_{M1} and R_{M2} each independently represents C₁₋₁₂ linear or branched alkyl, 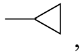 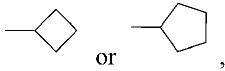 one or at least two nonadjacent -CH₂- in the C₁₋₁₂ linear or branched alkyl can each be independently replaced by -CH=CH-, -C=C-, -O-, -CO-, -CO-O- or -O-CO-; ring 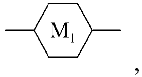 ring 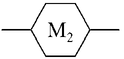 and ring 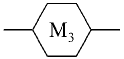 each independently represents 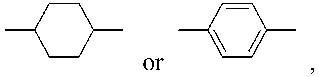 one or at least two -CH₂- in the 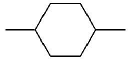 can be replaced by -O-; at most one -H in the 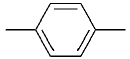 can be substituted by halogen;
Z_{M1} and Z_{M2} each independently represents single bond, -CO-O-, -O-CO-, -CH₂O-, -OCH₂-, - CH=CH-, -CH₂CH₂- or -(CH₂)₄-;
n_{M1} represents 0, 1, 2 or 3, wherein when n_{M1} = 2 or 3, ring 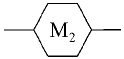 may be the same or different, Z_{M2} may be the same or different.

9. The liquid crystal composition according to claim 8, wherein the compound of formula M is selected from a group consisting of the following compounds: 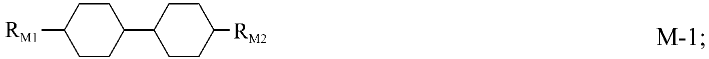 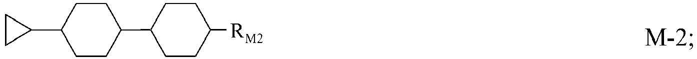 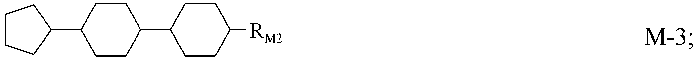 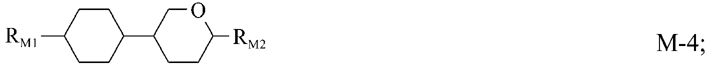 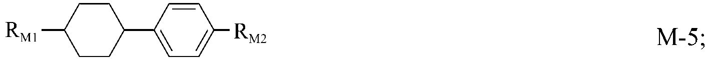 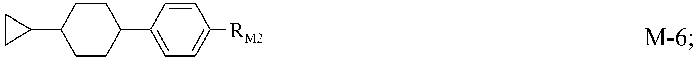 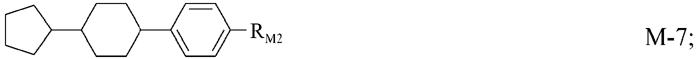 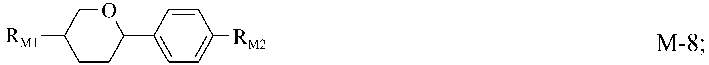 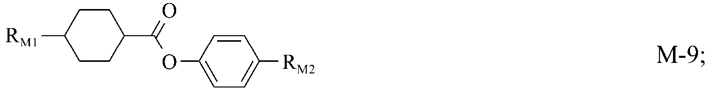 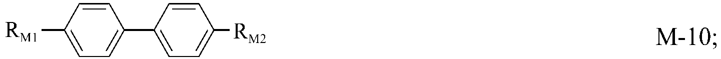 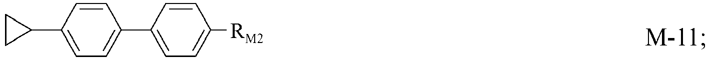 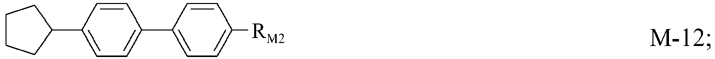 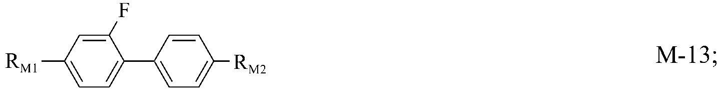 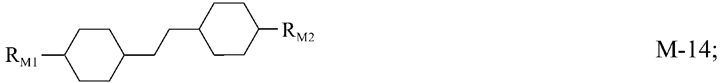 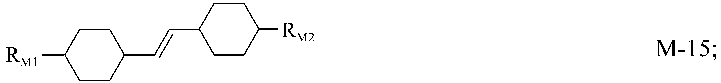 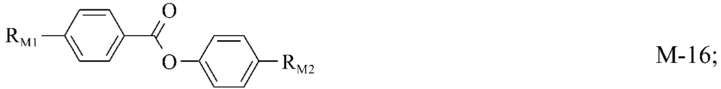 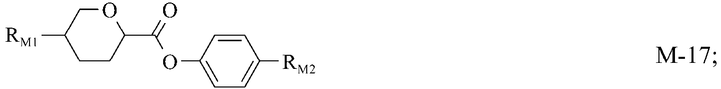 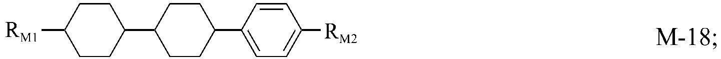 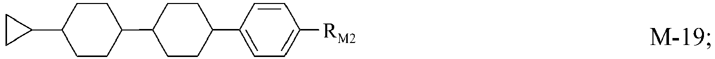 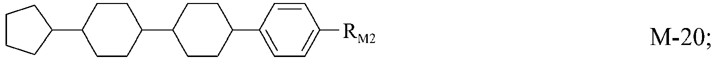 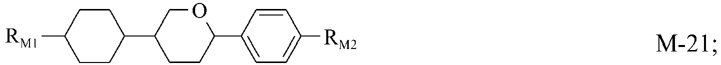 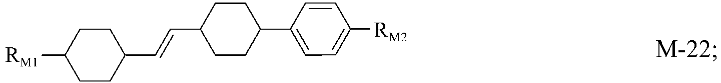 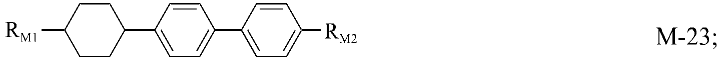 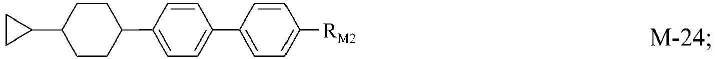 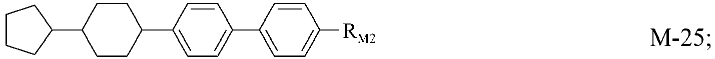 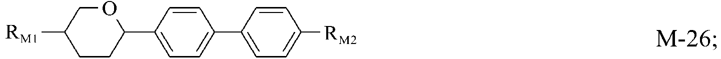 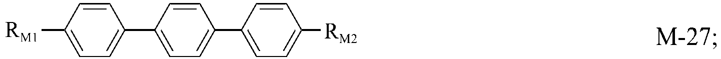 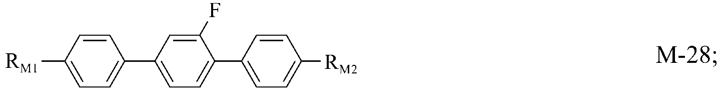 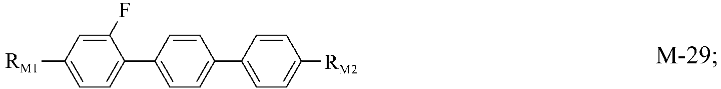 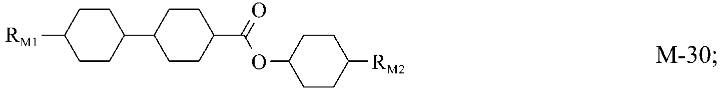 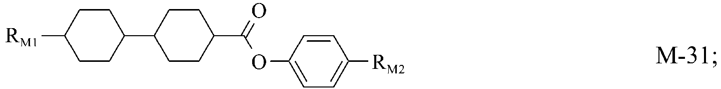 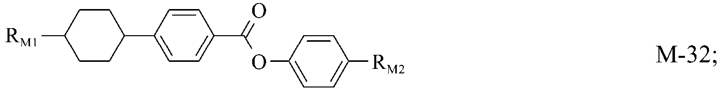 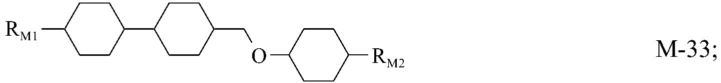 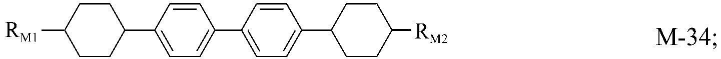 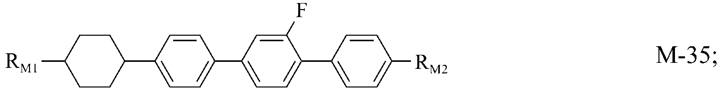 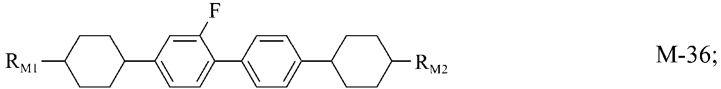 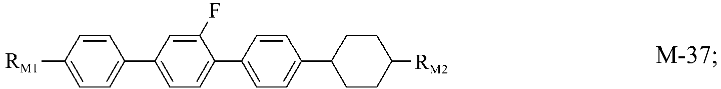 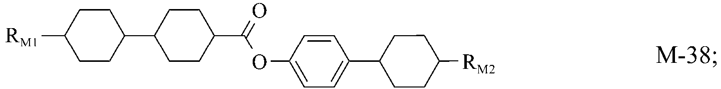 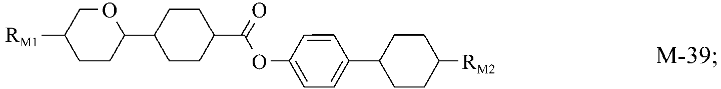 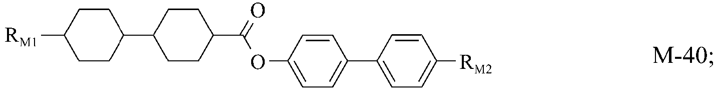 and 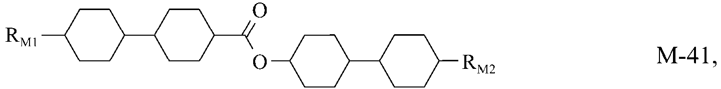 wherein, R_{M1} and R_{M2} each independently represents C₁₋₁₀ linear or branched alkyl, one or more than two nonadjacent -CH₂- in the C₁₋₁₀ linear or branched alkyl can each be independently replaced by -CH=CH-, -C=C-, -O-, -CO-, -CO-O- or -O-CO-.

10. A liquid crystal display device comprising the liquid crystal composition of any one of claims 1-9.
